# EUROPEAN PATENT APPLICATION

(11) **EP 4 550 813 A2**
(43) Date of publication of application: **07.05.2025**
(21) Application number: 24209644.4
(22) Date of filing: 29.10.2024
(51) Int. Cl.: H04N 23/45, H04N 23/13, H04N 23/54, H04N 25/48, H04N 25/773, H04N 23/56

(54) **AN IMAGE SENSOR SYSTEM, METHOD OF CONTROL AND COMPUTER PROGRAM**

(30) Priority: 31.10.2023 GB 202316633
(71) Applicant: Sony Semiconductor Solutions Corporation, Atsugi-shi, Kanagawa 243-0014 (JP)
(72) Inventor: AVITABILE, Antonio, Basingstoke, RG22 4SB (GB); LAVIZZARI, Simone, Basingstoke, RG22 4SB (GB); STOPPA, David, Basingstoke, RG22 4SB (GB)
(74) Representative: D Young & Co LLP

(57) **Abstract**

In accordance with the present disclosure, an image sensor system for image capture is provided, the image sensor system comprising: a first image sensor, the first image sensor comprising an array of pixels being configured to detect light of at least a first wavelength range within a first image area; a second image sensor, the second image sensor comprising an array of pixels being configured to detect light of at least a second wavelength range within a second image area, wherein a number of pixels of the array of pixels of the second image sensor is less than a number of pixels of the array of pixels of the first image sensor and/or the second image area is smaller than the first image area, each pixel of the array of pixels of the second image sensor being configured to detect arrival of a single photon; an actuator configured to actuate the second image sensor; and a controller configured to control the actuator to actuate the second image sensor such that the second image area is positioned within a portion of the first image area during image capture with the image sensor system.

## Description

### BACKGROUND

### Field of the Disclosure

The present disclosure relates to an image sensor system, a method of control and a computer program.

### Description of the Related Art

The "background" description provided herein is for the purpose of generally presenting the context of the disclosure. Work of the presently named inventors, to the extent it is described in the background section, as well as aspects of the description which may not otherwise qualify as prior art at the time of filing, are neither expressly or impliedly admitted as prior art against the present invention.

Image sensors can be used in order to acquire image data. Image data can include still image data (such as a photo) or moving image data (such as a video). Image sensors may be included as part of an image processing device (such as an image capture device). Image sensors can also be used to obtain image data related to depth information in a scene.

One type of image sensor includes a charge accumulation sensor. Charge accumulation sensors (including charge-coupled devices and complementary metal oxide semiconductor sensors, for example) are used in a wide range of different devices. However, these sensors may not provide a desired level of image quality under certain image conditions. For example, these types of image sensors may not provide a desired level of image quality under low light conditions or for fast moving objects and scenes.

Another type of image sensor includes single photon detectors which can detect the presence of a single photon (such as single photon avalanche diodes). However, while single photon detectors are very sensitive, it can be very difficult to produce such an image sensor which satisfies constraints of physical size and space. Furthermore, the cost of these image sensors can be very high. Accordingly, the use of single photon detector image sensors is quite limited and restricted.

As such, it can be difficult to provide an image sensor which that can acquire high quality image data in certain image capture conditions.

It is an aim of the present disclosure to address these issues.

### SUMMARY

A brief summary about the present disclosure is provided hereinafter to provide a basic understanding related to certain aspects of the present disclosure.

Embodiments of the present disclosure are defined by the independent claims. Further aspects of the disclosure are defined by the dependent claims.

With embodiments of the disclosure, an actuator is used in order to change a position of a second image sensor of an image sensor system during image capture and/or while obtaining image depth information. Thus, the second image sensor can be used in order to obtain high quality image data which can be used in order to optimize or enhance the image data from a first image sensor and/or to obtain more accurate depth information of a scene. Furthermore, said second image sensor can be implemented in an image sensor system without increasing the physical size (form factor) or cost of the image sensor system. Alternatively or in addition, the actuator can be used in order to change position of the image sensor and/or a light emitter. Thus, image depth data of higher quality can also be provided, without increasing the physical size and cost of the image sensor system.

The present disclosure is not particularly limited to these advantageous technical effects. Other technical effects will become apparent for the skilled person when reading the disclosure.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
Figure 1 illustrates an apparatus in accordance with embodiments of the disclosure;
Figure 2 illustrates an image sensor system in accordance with embodiments of the disclosure;
Figure 3 illustrates a pixel array of an image sensor system in accordance with embodiments of the disclosure;
Figure 4 illustrates a first and second image area in accordance with embodiments of the disclosure;
Figure 5 illustrates a first and second image area in accordance with embodiments of the disclosure;
Figure 6 illustrates a first and second image area in accordance with embodiments of the disclosure;
Figure 7A to 7D illustrate example actuation of a second image sensor in accordance with embodiments of the disclosure;
Figures 8 illustrates an example configuration of a second image sensor in accordance with embodiments of the disclosure;
Figure 9 illustrates an example filter pattern in accordance with embodiments of the disclosure;
Figure 10 illustrates an example of generating an output image in accordance with embodiments of the disclosure;
Figures 11A to 11E illustrate configurations of an image sensor system in accordance with embodiments of the disclosure;
Figure 12 illustrates an example method in accordance with embodiments of the disclosure;
Figure 13 illustrates an example method in accordance with embodiments of the disclosure; and
Figure 14 illustrates an example method in accordance with embodiments of the disclosure.

### DESCRIPTION OF THE EMBODIMENTS

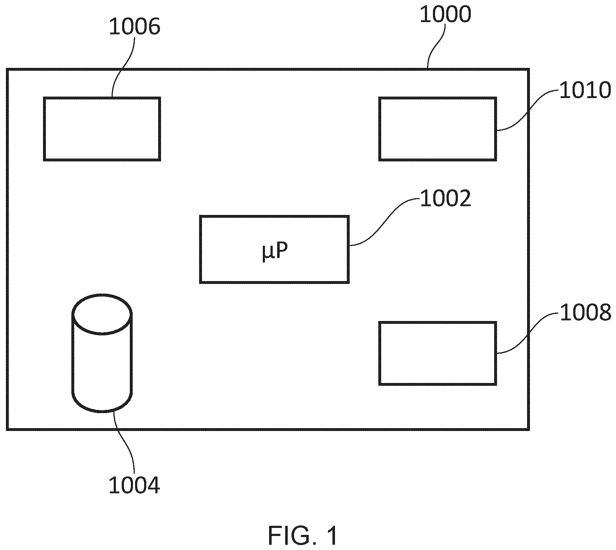

Referring to Figure 1, an apparatus 1000 (an example of an information processing device) according to embodiments of the disclosure is shown. Typically, an apparatus 1000 according to embodiments of the disclosure is a computer device such as a personal computer, an entertainment system, a terminal connected to a server. Indeed, in embodiments, the apparatus may also be a server. The apparatus 1000 is controlled using a microprocessor or other processing circuitry 1002. In some examples, the apparatus 1000 may be a portable computing device such as a mobile phone (e.g. a so-called "smartphone"), laptop computer or tablet -computing device. More generally, the computer device can include any other type or portable computing device.

The processing circuitry 1002 may be a microprocessor carrying out computer instructions or may be an Application Specific Integrated Circuit. The computer instructions are stored on storage medium 1004 which maybe a magnetically readable medium, optically readable medium or solid state type circuitry. The storage medium 1004 may be integrated into the apparatus 1000 or may be separate to the apparatus 1000 and connected thereto using either a wired or wireless connection. The computer instructions may be embodied as computer software that contains computer readable code which, when loaded onto the processor circuitry 1002, configures the processor circuitry 1002 to perform a method according to embodiments of the disclosure.

Additionally, an optional user input device 1006 is shown connected to the processing circuitry 1002. The user input device 1006 may be a touch screen or may be a mouse or stylist type input device. The user input device 1006 may also be a keyboard, controller, or any combination of these devices. In some examples, the user input device 1006 may be a microphone or other device. The user to may then provide input via sounds or speech.

A network connection 1008 may optionally be coupled to the processor circuitry 1002. The network connection 1008 may be a connection to a Local Area Network or a Wide Area Network such as the Internet or a Virtual Private Network or the like. The network connection 1008 may be connected to a server allowing the processor circuitry 1002 to communicate with another apparatus in order to obtain or provide relevant data. The network connection 1002 may be behind a firewall or some other form of network security.

Additionally, shown coupled to the processing circuitry 1002, is a display device 1010. The display device 1010, although shown integrated into the apparatus 1000, may additionally be separate to the apparatus 1000 and may be a monitor or some kind of device allowing the user to visualize the operation of the system (e.g. a display screen or a head mounted display). In addition, the display device 1010 may be a printer, projector or some other device allowing relevant information generated by the apparatus 1000 to be viewed by the user or by a third party.

As explained in the Background, image sensors can be used in order to acquire image data. However, the type of image sensor used can have a significant impact on the image quality of the image obtained. For example, certain types of image sensor - such as charge accumulation sensors - can struggle to produce an image with a desired level of image quality under certain image capture conditions (such as low light conditions, for example). Other types of image sensors, such as single photon detectors are very sensitive, but it can be very difficult to produce such an image sensor which satisfies constraints of physical size and space. Furthermore, the cost of these image sensors can be very high. In particular, the cost of these image sensors may be high due to the aforementioned constraints on the image sensor (which in turn constrain the die size for the image sensor).

Accordingly, an image sensor system, method of control and computer program are provided in accordance with the present disclosure.

### <Image Sensor System>

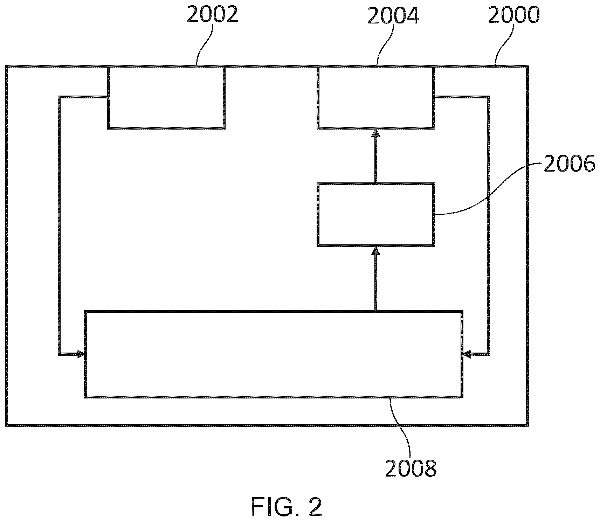

Figure 2 of the present disclosure illustrates an example image sensor system in accordance with embodiments of the disclosure.

The image sensor system 2000 of Figure 2 of the present disclosure comprises first image sensor 2002, a second image sensor 2004, an actuator 2006 and a controller 2008.

The first image sensor 2002 comprises an array of pixels being configured to detect light of at least a first wavelength range within a first image area.

The second image sensor 2004 comprises an array of pixels being configured to detect light of at least a second wavelength range within a second image area, wherein a number of pixels of the array of pixels of the second image sensor is less than a number of pixels of the array of pixels of the first image sensor and/or the second image area is smaller than the first image area, each pixel of the array of pixels of the second image sensor being configured to detect arrival of a single photon.

The actuator 2006 of the image sensor system 2000 is configured to actuate the second image sensor 2004.

Finally, the controller 2008 is configured to control the actuator 2006 to actuate the second image sensor such that the second image area is positioned within a portion of the first image area during image capture with the image sensor system 2000.

In this way, the image sensor system the image sensor system 2000 can change the position of the second image area within the first image area during image capture. This enables the second image sensor 2004 to be used in order to obtain image data which can be used in order to optimize or enhance the image data from the first image sensor 2002. This will be described in more detail later.

In examples, the controller 2008 may be provided in a same device as the first image sensor 2002, the second image sensor 2004 and the actuator 2006. In examples, the controller 2008 may be provided in a different device to the first image sensor 2002, the second image sensor 2004 and the actuator 2006. For example, the controller 2008 may be provided in a separate device and provide instructions to perform control of the actuator 2006 using any suitable wired or wireless communication.

In examples, the controller 2008 may be processing circuitry of the image sensor system 2000. For example, the controller 2008 may be a microprocessor carrying out computer instructions or may be an Application Specific Integrated Circuit.

In examples, a power supply (being a source of electrical power) may be provided as part of the image sensor system. The power supply may, in examples, include a battery. In examples, a power supply may be provided external to the image sensor system; the image sensor system may then use power from the power supply external to the image sensor system. For example, when the image sensor system is included in an information processing device (such as a camera) the image sensor system may use a power supply of the information processing system.

The type of actuator used in accordance with embodiments of the disclosure is not particularly limited. Indeed, the type of actuator used may depend, at least in part, on the situation to which the embodiments of the disclosure are applied. In examples, the actuator may include at least one of a list comprising a mechanical actuator, a piezoelectric actuator, an electric actuator, a shape memory alloy actuator and/or an ultrasonic actuator. In examples, a combination of different actuators may be used in order to provide a different range of motion. In examples, a combination of different actuators may be used in order to provide motion along a different axes.

In examples, the first image sensor may comprise an accumulation image sensor. In examples, the accumulation image sensor may comprise a charge coupled device. In examples, the accumulation sensor may comprise a complementary metal oxide semiconductor detector.

In examples, the second image sensor is an image sensor configured to detect arrival of a single photon. In examples, the second image sensor may comprise a single-photon avalanche diode (SPAD). A SPAD is able to detect the arrival of a single photon which can thus be used in order to improve the sensitivity of an image sensor.

Further details of the image sensor system 2000 will now be provided.

### <Pixel Array>

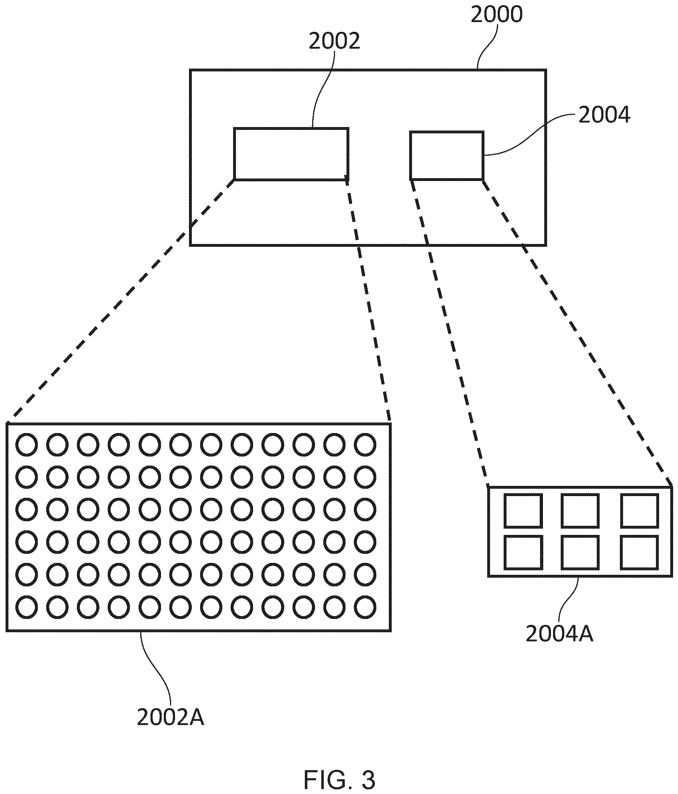

Consider, now, Figure 3 of the present disclosure. Figure 3 illustrates a pixel array of an image sensor system in accordance with embodiments of the disclosure.

An image sensor system is shown in Figure 3. The image sensor system may be an image sensor system such as image sensor system 2000 as described with reference to Figure 2 of the present disclosure. Accordingly, this image sensor system 2000 comprises a first image sensor 2002 and a second image sensor 2004.

The image sensor system 2000 of Figure 3 also includes an actuator 2006 and a controller 2008 as described with reference to Figure 2 of the present disclosure. However, the actuator 2006 and the controller 2008 are not illustrated in Figure 3 of the present disclosure.

The first image sensor 2002 comprises an array of pixels being configured to detect light of at least a first wavelength range within a first image area. A pixel array 2002A of the first image sensor 2002 is illustrated in Figure 3 of the present disclosure.

In the example of Figure 3, the pixel array of the first image sensor 2002 is a uniform array of pixels. However, the present disclosure is not particularly limited in this regard. In examples, the pixel array of the first pixel sensor 2002 may be a non-uniform array of pixels.

Each pixel of the first image sensor 2002 is configured to detect light of at least a first wavelength range. For example the pixels of the first image sensor 2002 may be configured to detect visible light (light within a wavelength range of 380 to 700nm for example). Different filters may be provided over the different pixels of the first image sensor 2000 in order that the first image sensor 2002 can capture image data concerning different wavelengths of light in this wavelength range. For example, the first image sensor may be configured to obtain red, green and blue image data (which can be used to generate a colour image). This will be described in more detail later.

As previously explained, the pixels of the first image sensor 2002 may comprise light accumulation detectors. In this example, the pixels of the first image sensor are complementary metal oxide semiconductors (CMOS) sensors. Accordingly, in this example, each pixel comprises a number of different transistors. The CMOS sensor coverts light to an electrical charge. In particular, the CMOS sensor converts photons light into electrons. Each pixel of the CMOS sensor can be read out individually (with the electric charge corresponding to the light intensity of that pixel).

The number of pixels in the first image sensor 2002 pixel array 2002A is not particularly limited to that illustrated in Figure 3 of the present disclosure. In particular, it will be appreciated that the number of pixels in the first image sensor 2002 pixel array 2002A may be significantly more than that illustrated in Figure 3 of the present disclosure. For example, the first image sensor 2002 pixel array 2002A may comprise many million pixels. However, the present disclosure is not particularly limited to any particular number of pixels being present in the pixel array.

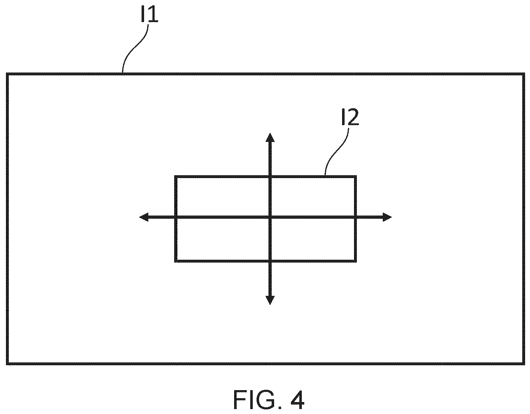

The pixels of the first image sensor 2002 capture images within a first image area. This will be described in more detail with reference to Figure 4 of the present disclosure. The frame rate of the first image sensor may be a first frame rate (such as 60 frames per second).

The second image sensor 2004 is also illustrated in Figure 3 of the present disclosure. The second image sensor 2004 comprises an array of pixels being configured to detect light of at least a second wavelength range within the first image area (being the image area which the pixels of the first image sensor are configured to detect light), wherein a number of pixels of the array of pixels of the second image sensor is less than a number of pixels of the array of pixels of the first image sensor and/or the second image area is smaller than the first image area. A pixel array 2004A of the second image sensor 2004 is illustrated in Figure 3 of the present disclosure.

In the example of Figure 3, the pixel array of the first image sensor 2004 is a uniform array of pixels. However, the present disclosure is not particularly limited in this regard. In examples, the pixel array of the second pixel sensor 2004 may be a non-uniform array of pixels.

As explained, each pixel of the second image sensor 2004 is configured to detect light of at least a second wavelength range. In examples, the second wavelength range may be the same as the first wavelength range (i.e. visible light, such as light within a wavelength range of 380nm to 700nm, for example). However, in some examples, the wavelength range for which the pixels of the second image sensor 2004 are configured to detect light may be different from the first wavelength range. For example, when used as part of a time-of-flight sensor, the wavelength range of the second image sensor 2004 may be a wavelength range such as range of 650nm to 1400nm. In examples, a wavelength range for the second image sensor 2004 as part of a time-of-flight sensor may be 940nm.

However, the present disclosure is not particularly limited to these example wavelength ranges for the second image sensor and any suitable wavelength range may be used as required. The pixels of the second image sensor may further be provided with different filters in order that the second image sensor may be configured to obtain red, green and blue image data (which can be used to generate a colour image). This will be described in more detail later.

As previously explained, the pixels of the second image sensor 2004 may comprise single photon detectors (i.e. pixels which can detect arrival of a single photon). In this example, the pixels of the second image sensor 2002 pixel array 2004A are single photon avalanche diode detectors (SPAD). A SPAD comprises a photodiode with a reverse bias voltage higher than the breakdown voltage of the photodiode. A single photon incident on the SPAD can trigger a self-sustaining avalanche. Therefore, the SPAD is very sensitive with the ability to detect a single photon.

However, SPADs can be very expensive to produce. Furthermore, SPADs can be very difficult to produce within an image sensor of a compact physical size (small form factor). Accordingly, as explained in the Background, the use of SPADs in image sensors is very limited.

However, in the present disclosure, the second image sensor is provided with a low number of pixels. That is, the number of pixels in the second image sensor can be less than the number of pixels in the first image sensor and/or the second image area can be smaller than the first image area. Accordingly, the second pixel sensor is a low resolution array and can be made small and compact. Indeed, the second pixel sensor may be able to detect light in only a portion of the first image area at a given instance of time. Alternatively, the second pixel sensor may be able to detect light over an entire first image area, but at a lower resolution.

In the present disclosure, the provision of the second image sensor with a low number of pixels can include a second image sensor for which the absolute number of pixels is low. Alternatively, the provision of the second image sensor with a low number of pixels can include a second image sensor for which the relative number of pixels (compared to the number of pixels of the first image sensor) is low. For example, the second image sensor may be a 1 megapixel (MP) - whereas the first image sensor may comprise many millions of pixels. However, the present disclosure is not particularly limited to any specific number of pixels on the second image sensor, provided that the number of pixels in the second image sensor is less than the number of pixels in the first image sensor (enabling the second pixel sensor to be made small and compact).

The actuator 2006 (not shown in Figure 3) is configured to actuate the second image sensor such that the second image sensor can be positioned to detect light from a second image area within a portion of the first image area during image capture with the image sensor. Thus, the second image sensor can be used in order to obtain image data which can be used in order to optimize or enhance the image data from the first image sensor.

In examples, the frame rate of the second image sensor 2004 may be much higher than the frame rate of the first image sensor. For example, when the pixels of the second image sensor 2004 are SPAD detectors, the frame rate of the SPAD may exceed 1000 frames per second. This is because SPAD detectors can have a very fast readout. In particular, SPAD-based Quanta Image Sensors (QIS) can generate low number of bit images can operate with a very fast readout. In examples, these SPAD detectors can operate at 1kfps or more.

Thus, in examples, a frame rate of image data from the second image sensor may be higher than a frame rate of image data from the first image sensor.

Accordingly, in examples, the actuator may move the second sensor 2004 to acquire fast single-photon image data which can be used in order to complement the image data from the first image sensor. That is, even though the resolution of the pixel array 2004A of the second pixel sensor is low, the actuation of the second pixel sensor (combined with the high frame rate of the pixels of the second pixel sensor (compared to the pixels of the first image sensor 2002)) can be used in order to provide enhanced image data (such as super-resolution imaging).

Figure 4 of the present disclosure illustrates a first and second image area in accordance with embodiments of the disclosure.

In this example, the image captured by the first sensor 2002 and the image captured by the second sensor 2004 are shown. That is, the pixel array 2002A of the first image sensor 2002 detects light in a first image area and the second image sensor 2004 detects light in a second image area. In this example, the second image area is smaller than the first image area. In examples, the image area is the field of view of the image sensor (which is the range of the observable world visible to the image sensor at any instance of time).

Thus, the first image sensor 2002 captures an image data having a first image area !1 and the second image sensor 2004 captures image data having a second image area 12. In this example, the second image area I2 is a smaller area than the first image area 11; this is because the second image sensor 2004A has a smaller pixel array 2004A than the first image sensor 2002A (and has a lower spatial resolution).

In the example of Figure 4 of the present disclosure, the second image area I2 is an area in the center of the first image area 11. Therefore, the image data from the first sensor is acquired from across the entire image area 11; data from the first sensor 2002 and the second sensor 2004 is acquired within the image area 12.

However, the position of the second image area I2 within the image area !1 is not limited to the center region shown in Figure 4. That is, the image sensor system 2000 comprises an actuator 2006 which is configured to actuate the second image sensor. Accordingly, the actuator 2006 (under control of the controller 2008) is able to change a position of the second image sensor 2004. This means that the control can control the actuator to actuate the second image sensor and thus position the second image area I2 within a portion of the first image area !1 during image capture within the image sensor system 2000.

In the example of Figure 4, the controller 2008 is configured to control the actuator 2006 to move the second image sensor 2004 and thus can change the position of the second image area I2 within the first image area 11. In this example, the image area I2 can be moved (by actuation of the second image sensor 2004) in the vertical and horizontal direction (to perpendicular directions which are parallel to a plane of the second image sensor 2004).

However, while movement of the second image sensor (and thus the second image area 12) in the example of Figure 4 of the present disclosure is limited to movement in the horizontal and vertical image directions, the present disclosure is not particularly limited in this regard. In examples, movement may also be provided in a third dimension perpendicular to both the horizontal (x) and vertical (y) directions described with reference to Figure 4. Indeed, in examples, the actuator may be configured to actuate the second image sensor in a z-direction perpendicular to the horizontal and vertical directions (being a direction which is also perpendicular to the plane of the image sensor). This provides improved control when moving the image sensor to position the second image area I2 at a certain position of the first image area 11.

Furthermore, in examples, the actuator may tilt or rotate the second image sensor 2004. Therefore, in examples, linear and/or rotational actuation can be provided by the actuator 2006.

In this way, the controller can move the second image area I2 to a position other than the central position (which may, in examples, be a default or initial position). This would change the portion of the first image data !1 for which the second image data (from the second image sensor 2004) is being captured (i.e. the overlapping portion of the first and second image areas). Accordingly, the second image area I2 can be changed during image capture by the image sensor system 2000; data from the second image sensor can therefore be used in order to optimize or enhance the image data from the first image sensor.

As previously mentioned, in examples the second image sensor 2004 may have a higher frame rate than the first image sensor. For example, when the second image sensor 2004 is a SPAD, the frame rate of the second image sensor (the rate at which data can be read out) may be more than 1000 frames per second. This may be much higher than the frame rate of the first image sensor 2002.

In examples, the controller may be configured to control the actuator to change the position of the second image sensor (and thus the portion of the first image area I1 with which the second image area I2 is positioned (or aligned)) multiple times during a single frame of image capture from the first image sensor 2002. For example, if the frame rate of the second image sensor 2004 is 10 times higher than the frame rate of the first image sensor 2002, then the position of the second image sensor may be changed approximately 10 times during a single frame of image capture of the first image sensor. In this example, this would enable image data from the second image sensor 2004 to be obtained from 10 different areas across the first image area !1 for a single frame of image data from the first image sensor 2002.

In examples, the controller may be configured to control the actuator to change the position of the second image sensor (and thus the portion of the first image area I1 with which the second image area I2 is positioned (or aligned)) multiple times corresponding to a single frame of image capture from the first image sensor 2002. That is, the controller may control the actuator such that the second image sensor acquires multiple frames of image capture from multiple different positions corresponding to a single image frame of image capture from the first image sensor 2002. The multiple frames of image capture of the second image sensor corresponding to the frame of image capture from the first sensor may be captured within a time period during which the first frame of image capture is performed (owing to the higher frame rate of the second image sensor). In examples, the multiple frames of image capture of the second image sensor may be obtained in a period of time before or after the period of time at which the image capture from the first image sensor is performed. Therefore, the present disclosure is not specifically limited to a situation where the frames from the second image sensor are acquired during the time at which the image capture from the first image sensor is performed. More generally, the frames of image capture from the second image sensor corresponding to the image capture from the first image sensor may be captured at a different time to the capture from the first image sensor.

Thus, in examples, multiple frames from the second image sensor can correspond to a single frame of the first image sensor.

Therefore, in examples, the controller is configured to control the actuator to actuate the second image sensor such that the second image area is positioned a plurality of times in association with one image frame of the first image sensor.

Accordingly, in examples, the actuator may move the second sensor 2004 to acquire fast single-photon image data which can be used in order to complement the image data from the first image sensor. That is, even though the resolution of the pixel array 2004A of the second pixel sensor is low, the actuation of the second pixel sensor (combined with the high frame rate of the pixels of the second pixel sensor (compared to the pixels of the first image sensor 2002)) can be used in order to provide enhanced image data (such as super-resolution imaging).

The present disclosure is not particularly limited to the example of the first image area !1 and the second image area I2 as described with reference to Figure 4 of the present disclosure. For example the relative size of the first and second image area may be very different from this example. Indeed, the first image area !1 may be much larger than the second image area I2 in examples.

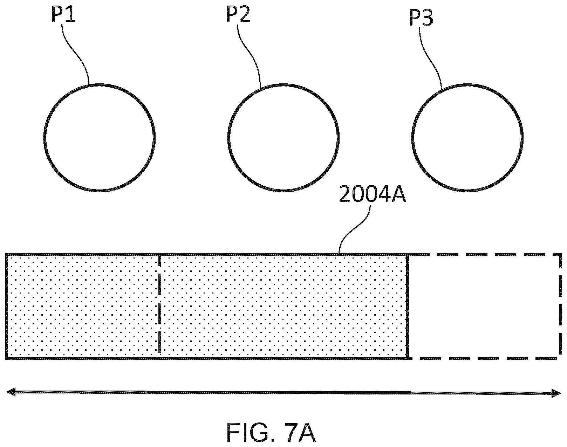

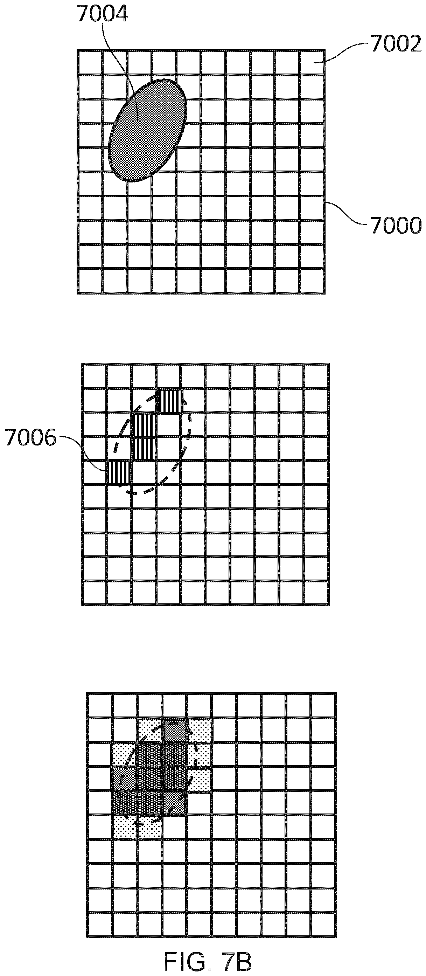

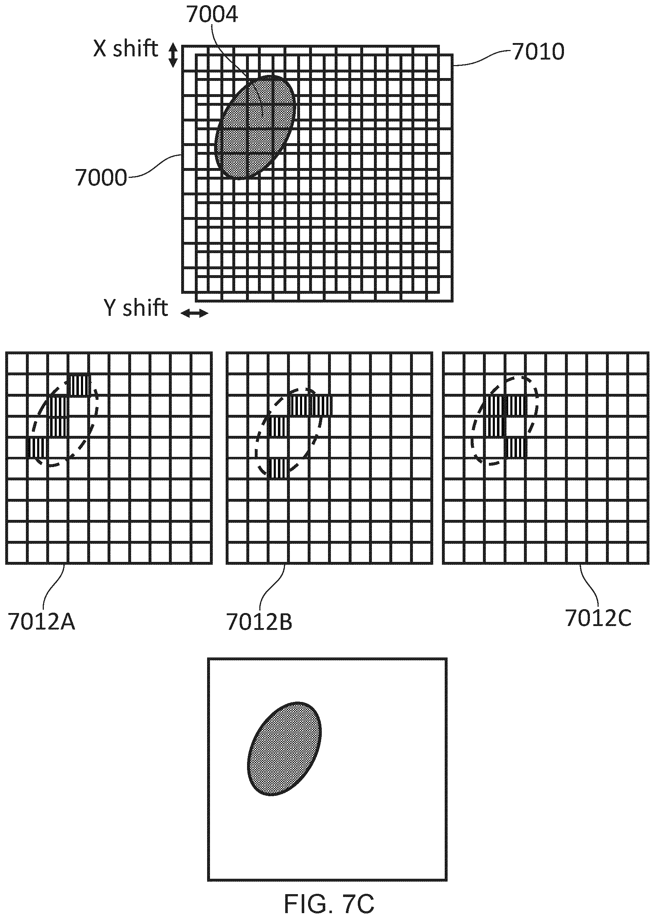

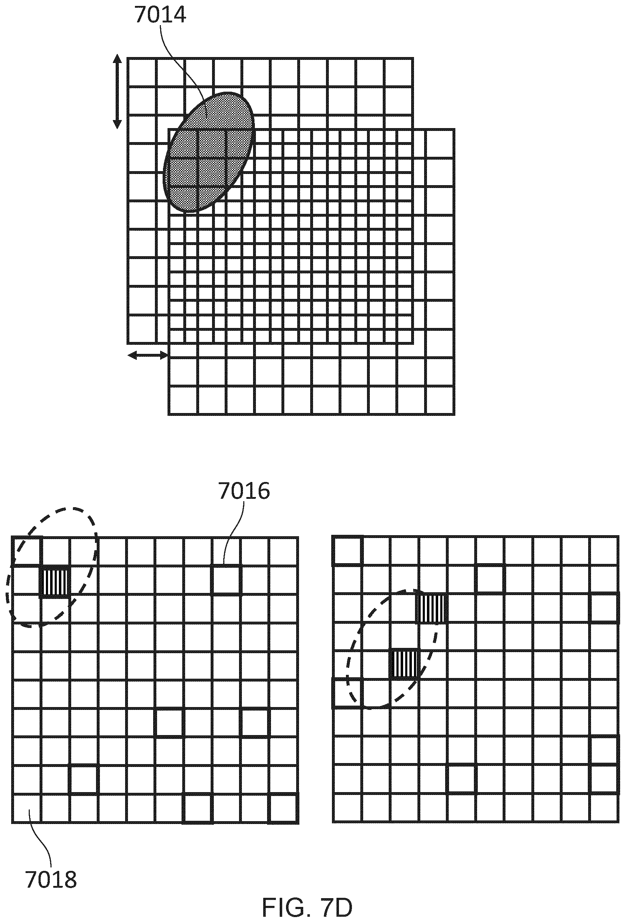

Furthermore, in examples, the first image area !1 and the second image area I2 may be the same size (with the second image sensor having a smaller number of pixels than the first image sensor). In this example, a frame of image data of the second image sensor provides lower resolution image data across the same image area as the first image sensor. However, in examples, the frame rate of the second image sensor is higher than the frame rate of the first image sensor. Therefore, the controller is configured to control the actuator to actuate the second image sensor such that the second image area is positioned within a portion of the first image area during image capture with the image sensor system. This means that oversampling can be performed with the second image sensor thus increasing the effective spatial resolution of the second image sensor (described in more detail with reference to Figure 7 of the present disclosure). Accordingly, the second image sensor can be used in order to obtain high quality image data which can be used in order to optimize or enhance the image data from a first image sensor.

Furthermore, movement of the second image area I2 is not limited to the type of movement described with reference to this example.

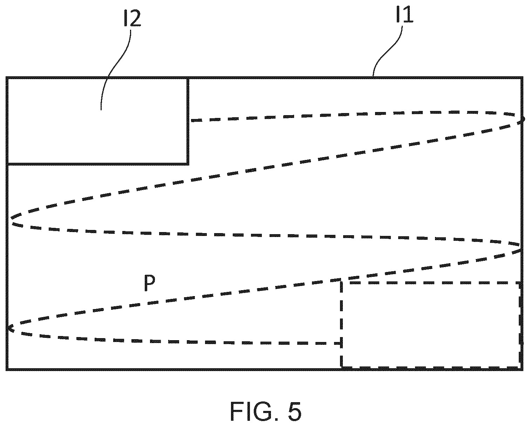

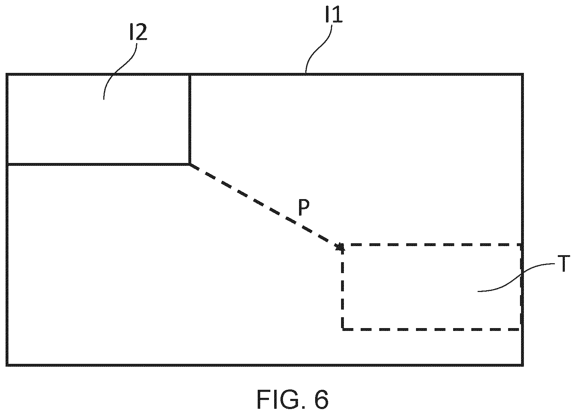

Further examples of the movement of the second image area I2 during image capture (by actuation of the second image sensor 2004) will now be described with reference to Figures 5 and 6 of the present disclosure. Figures 7A to 7D (described in more detail later) also provide further examples of the movement of the second image sensor.

Consider, now, Figure 5 of the present disclosure. Like Figure 4, Figure 5 of the present disclosure illustrates a first and second image area in accordance with embodiments of the disclosure. Again, as described with reference to Figure 4 of the present disclosure, the first image I1 is the area covered by the first image sensor 2002 and the second image area I2 is the area covered by the second image sensor 2004.

In this example, the initial position of the second image area I2 is the top left-hand corner of the first image area I1. This may be the position of the second image area I2 at the start of image capture, for example. Then, during image capture with the image capture sensor 2000 (i.e. single frame of image capture of the first image sensor 2002) the second image area I2 is moved (through actuation by the actuator 2006 under control of the controller 2008). In this example, the movement of the second image area I2 follows a path P, such that the second image area I2 is positioned to cover all areas of the first image area !1 for the one frame of image data from the first image sensor 2002. This means that the data from the second image sensor 2004 is available for all regions of the first image area I1. For example, the first image sensor may acquire a single high resolution frame while the second image sensor (actuated by the actuator under control of the controller) acquires multiple frames (each individually at a lower spatial resolution with a lower number of bits) at high frame rates. As such, in this example, the image data from the second image sensor 2004 (which can include multiple frames of data) can be used in order to complement the image data from the first image sensor across the full first image area !1 for each frame of image data acquired by the first image sensor 2002.

In addition, the data from the second image sensor may be used to complement image data from the first image sensor acquired for multiple frames of data from the first image sensor (including, for example, burst photography or video data). In addition, data from the second image senor may be used to complement image data from an individual (partial) area or region of the image data acquired by the first image sensor.

The path P may vary from the path shown in Figure 5. That is, in examples, any suitable path of the second image sensor 2004 can be used when covering the entire first image area (as in the example of Figure 5). For example, the second image area I2 may move in vertical columns across the first image area, the second image area I2 may move in horizontal rows across the first image area, the second image area may move in diagonal lines across the first image area, the second image area may move in concentric circles across the first image area, the second image area may move in a sweeping path across the first image area or the like.

Thus, Figure 5 of the present disclosure provides an example where the controller is configured to control the actuator in accordance with a predetermined pattern. Furthermore, in examples (as also the case for Figure 5 of the present disclosure) the predetermined pattern may be a pattern for the second image area to cover the entire first image area over a number of frames of image data of the second image sensor.

While the example of Figure 5 has been described with an example where the movement of the second image area cover the entire first image area within a single frame of image data of the first image sensor 2002, the present disclosure is not particularly limited in this respect. In examples, targeted movement of the second image area (through actuation of the second image sensor 2004) may be provided.

Consider, now, Figure 6 of the present disclosure. Like Figures 4 and 5, Figure 6 illustrates a first and second image area in accordance with embodiments of the disclosure. Again, as described with reference to Figures 4 and 5 of the present disclosure, the first image I1 is the area covered by the first image sensor 2002 and the second image area I2 is the area covered by the second image sensor 2004.

However, in contrast to Figure 5 of the present disclosure, the movement of the second image area I2 is a targeted movement in this example.

Targeted movement may be performed in order to provide the second image area I2 to align with a portion of the first image area !1 for which the data from the first image sensor 2002 can be most improved when compensated with the image data from the second image sensor 2004 (i.e. a portion of the first image area !1 for which having the image data from the second image sensor 2004 would be most relevant).

As explained, in examples, the first image sensor 2002 may be an image sensor such as an accumulation type image sensor (such as a CMOS sensor) or the like. This type of sensor may suffer in image quality in certain image conditions (for example, low light image conditions) or for certain types of images (for example, images with fast moving objects). As such, there may be a region of the image data from the first image sensor 2002 for which the image quality is lower (e.g. a region having a fast moving object); the data from the second image sensor 2004 would be most relevant for this image region.

Accordingly, in examples, the controller may be configured to use data from one or more preceding frames of image data from the first or second image sensor in order to control the actuator (and thus the position of the second image area). For example, the controller may be configured to analyze the first image data to identify a portion of the first image area having an image quality below a predetermined threshold value and control the actuator to actuate the second image sensor and position the second image area within the identified portion of the first image area.

In examples, a test frame of image data may be acquired, with the test frame of image data being used in order to identify and determine the targeted area of the image area for which second image data is required.

In the example of Figure 6, the image area I2 is at an initial position within the image area I1. Then, the controller identifies that a target area T of the first image area !1 for which it would be particularly advantageous to have the data from the second image sensor 2004. Accordingly, the controller is configured to control the actuator 2006 to actuate the second image sensor to move the second image sensor along the path P shown in Figure 6 such that the second image area I2 is positioned at the target area T and thus aligns with this portion of the first image area I1.

In this way, use of the second image sensor 2004 can be optimized in order that the data from the second image sensor 2004 is acquired for those regions where it is most required. This can reduce the image data from the second image sensor 2004 (as obtained only for the regions where it is most relevant) which improves the data efficiency of the image sensor system 2000.

The predetermined threshold value may be changed depending on the situation to which the embodiments of the disclosure are applied. For example, a different predetermined threshold value may be set depending on the type of image being captured, a mode of image capture, and/or an intended use of the image which has been captured. For example, if an information processing device (such as an image capture device) in which the image sensor 2000 is provided is used in a *"sport mode"* then it may be determined that reduction of blur in the image is most relevant. Accordingly, the predetermined threshold of image quality related to a level of blur in the image may be made lower, in order to ensure that second image data in a manner which enables the level of blur to be reduced.

Indeed, in examples, the image quality may include a level of brightness in the first image data, a level of blur in the first data and/or a level of image detail in the first image data (indicating that higher resolution imaging will be required for a region with high levels of image detail). However, the present disclosure is not particularly limited to these examples of image quality, and any suitable indicator of image quality can be used by the controller to identify a target region for positioning of the second image area I2 in accordance with embodiments of the disclosure.

In examples, the movement of second image area I2 (through actuation of the second image sensor 2004) may be such that the change in position is large. For example, the second image area I2 may be at a first location such as the top left-hand corner of the first image area !1 and may then be moved to a second location at the bottom right-hand corner of the second image area I2. Therefore, the change in position of the second image area I2 can be large (i.e. a magnitude of movement exceeding a pixel size of the second image sensor).

However, in other examples, the movement of the second image area I2 (through actuation of the second image sensor 2004) may be such that the change in position is small; in this context, a small change in position is a change in position corresponding to a magnitude of movement less than a pixel size of the second image sensor.

Consider, now, Figure 7A of the present disclosure. Figure 7A of the present disclosure illustrates example actuation of a second image sensor in accordance with embodiments of the disclosure.

In this example, a number of pixels P1, P2 and P3 of the first image sensor are shown. The pixels of the first image sensor 2002 may be pixels of an image sensor such as a CMOS sensor or the like. Furthermore, a pixel P4 of the second image sensor 2004 is shown. The pixel of the second image sensor may be a SPAD detector or the like. The pixel size of the second image sensor 2004 is bigger than the pixel size of the pixels of the first image sensor 2002.

In accordance with embodiments of the disclosure, the image sensor system 2000 comprises an actuator 2006 configured to actuate the second image sensor 2004. Therefore, the second image sensor 2004 can move as illustrated in Figure 7A of the present disclosure (in this example, a horizontal movement).

The initial position of the pixel P4 of the first image sensor P4 is shown by the shaded region illustrated in Figure 7A of the present disclosure. In this position, the pixel P4 is aligned with the pixels P1 and P2 of the first image sensor. Then, after actuation, the pixel P4 is moved to a second position (through actuation of the second image sensor 2004). The new position of the pixel P4 after actuation is shown by the dashed line in Figure 7A of the present disclosure. In this new position, the pixel P4 is aligned with pixels P2 and P3 of the first image sensor 2002. Accordingly, the movement of the second image sensor 2004 can be smaller than a pixel size of the second image sensor (i.e. a movement less than the size of the pixel P4 in this example).

In this way, movement of the second image sensor 2004 by the actuator 2006 can be performed at a quantization of movement below the size of a single pixel of the second image sensor 2004; precise movement of the second image sensor 2004 in this way enables efficient use of the data from the second image sensor 2004 when generating the output image of the image sensor system 2000 even when the size of the pixel of the second image sensor 2004 is larger than the size of the pixel of the first image sensor.

Consider, now, Figure 7B of the present disclosure. Figure 7B illustrates an example actuation of a second image sensor in accordance with embodiments of the disclosure (being an image sensor which can detect the arrival of a single photon (such as a SPAD).

The first panel of Figure 7B shows a detector array 7000 of the second image sensor. The detector array 7000 comprises an array of pixels 7002, where, in this example, each pixel of the array 7000 is a SPAD pixel.

An example light distribution 7004 falling on the detector array 7000 is shown. This is light from an object being imaged (having been focused on the detector by a lens, for example).

The pixels of the detector array are SPAD pixels; they are able to detect arrival of a single photon of light. Therefore, at a certain instance of time (a certain frame of the image) a photon may arrive at certain pixels in the detector array and not at other pixels in the detector array. That is, pixels of the detector array outside the light distribution 7004 will not detect the arrival of any photons. Pixels within the light distribution 7004 may for a certain frame, detect the arrival of photons. However, in a different frame, a pixel within the light distribution 7004 may not detect the arrival of any photons (as photons will not be continuously received within the light distribution.

Accordingly, the second panel of Figure 7B illustrates an example output of the image sensor when operating in a 1-bit (single frame) mode. Here, the pixels 7006 within the area of light distribution 7004 have detected the arrival of a photon (within that image frame).

Accordingly, it can be seen that the effective resolution of a frame of the image sensor may be quite low.

The third panel of Figure 7B illustrates an example output of the image sensor when operating in a multi-bit (multi frame) mode. Here, the output of the SPAD pixels is accumulated and combined across a number of frames. Accordingly, even if a pixel does not receive a photon of light at a certain instance of time, the same pixel will still record a value in the output if a pixel is received at a different instance of time (a different frame) within the multiple frames being combined. The more frames in which a photon is detected, the higher the value output by the pixel for the combined multi-frame image will be. Therefore, it can be seen that the effective resolution of the frame of the image sensor can be improved by use of the multi-frame image mode. However, the resolution remains quite low.

However, as previously explained, embodiments of the disclosure utilize actuation of the second image sensor in order to provide improved image quality. For example, actuation of the second image sensor can be used in order to increase the effective resolution of the output.

Consider, now, Figure 7C of the present disclosure. Figure 7C illustrates an example output of the image sensor in accordance with embodiments of the disclosure. Specifically, in this example, a subpixel size shift in the x-direction and the y-direction is performed by the actuator between image frames of the second image sensor.

The top panel of Figure 7C shows the shift of the pixel array between image frames.

The pixel array of the second image sensor is shown at a first position 7000 for a first instance of time (e.g. a first image frame). Then, the same pixel array is actuated by the actuator 2006 under control of the controller 2008 to cause a shift in the x-direction and the y-direction. Following this shift, the same pixel array is located at a second position 7010 at a second instance of time (e.g. a second image frame). In this example, the shift in the x-direction and the shift in the y-direction is smaller than a pixel size of the pixel array of the second image sensor (similar to as described with reference to Figure 7A of the present disclosure).

While shown in the top panel of Figure 7C for only two instances of time, it will be appreciated that a shift in the x-direction and a shift in the y-direction may be performed for a further number of instances of time (e.g. for further image frames). The present disclosure is not particularly limited in this regard. The number of shifts of the pixel array may depend on the frame rate of the second image sensor and the nature of the object being imaged, for example. Nevertheless, it will be appreciated that the frame rate of the pixels of the second image sensor may be very high (typically, a SPAD pixel may have a frame rate in excess of 1000 frames per second). Therefore, the light distribution 7004 can be considered to remain at a constant position between image frames. Accordingly, since the light distribution 7004 can be considered to remain at a constant position, the relative position of the light distribution 7004 and the pixel array will change through actuation of the pixel array. As such, the light distribution will fall on a different portion of the pixel array (and thus different pixels of the pixel array) at different instances of time owing to the actuation of the pixel array for the different instances of time.

Consider, now, the second panel of Figure 7C of the present disclosure. The output of the pixel array at three different instances of time 7012A, 7012B and 7012C is shown. For each of these different instances of time, the position of the light distribution on the pixel array is slightly different; this is because the pixel array has been shifted in the x-direction and the y-direction between the image frames.

The output of the array at the first instance of time 7012A shows the pixels which have detected a photon at the first instance of time. The output of the array at the second instance of time 7012B shows the pixels which have detected a photon at the second instance of time. The output of the array at the third instance of time shows the pixels which have detected a photon at the third instance of time. Therefore, each of 7012A, 7012B and 7012C shows a possible 1-bit frame sensor output at different XY sampling positions (wherein the actuator has shifted the x and y position of the pixel array between the different instances of time).

By sampling the light distribution using the actuation of the pixel array in this manner, it is possible to increase the spatial resolution of the second image sensor. That is, a high spatial resolution image can be reconstructed by the controller using the different image data which has been acquired (at different sampling positions) - namely, 7012A, 7012B and 7012C in this example.

The third panel of Figure 7C of the present disclosure shows a high spatial resolution image which has been reconstructed from the image data which has been acquired. The constructed image has a virtual resolution of NxM pixels, compared to the nxm actual pixels in the pixel sensor array (where N >> n and M >> m). This is because an oversampling of the image can be performed by shifting the position of the pixel array and acquiring image data (sampling) the image at each of the different positions of the pixel array. Any suitable signal processing can be used by the skilled person to perform the reconstruction of the image from the spatial oversampling which has been performed.

Accordingly, the actuation of the second image sensor can be used in order to increase the spatial resolution of the output image. Thus, the second image sensor can be used in order to obtain high quality image data which can be used in order to optimize or enhance the image data from a first image sensor. Furthermore, said second image sensor can be implemented in an image sensor system without increasing the physical size (form factor) or cost of the image sensor system.

While the actuation described with reference to Figure 7C of the present disclosure has been described with reference to a shift of position smaller than a pixel size of the second image sensor, the present disclosure is not particularly limited in this regard. In other examples, the size of the shift by actuation of the sensor may be larger than a pixel size of the second image sensor.

Consider, now, Figure 7D of the present disclosure. Figure 7D illustrates an example output of the image sensor in accordance with embodiments of the disclosure. Specifically, in this example, a subpixel size shift in the x-direction and the y-direction is performed by the actuator between image frames of the second image sensor. However, in this example, the size of the pixel shift exceeds the size of a pixel of the second image sensor.

Indeed, in this example, the actuator is controlled to perform a shift to a random or pseudo random position. Furthermore, a SPAD sensor mask of activated pixels is also randomly or pseudo randomly generated and changed over time. This means that both the position of the pixel array and the pattern of the activated SPAD pixels changes over time.

Accordingly, the first panel of Figure 7D shows a shift in x-position and y-position of the pixel array for two different instances of time; again, it can be assumed that the light distribution 7004 remains at a same absolute position. Accordingly, a change in the position of the pixel array changes a portion of the pixel array upon which the light distribution is incident. Notably, while the top panel of Figure 7D shows a certain size of an x-shift and a certain size of y-shift, it will be appreciated that the present disclosure is not particularly limited in this regard. Instead, the size and direction of the shift will change as the actuator is controlled to perform a shift to a random or pseudo random position.

The second panel of Figure 7D shows the output of the image sensor at two different instances of time. On the left-hand side of the second panel of Figure 7D, the output of the array at a first instance of time is shown. Here, the array is an initially position, such that the light distribution 7004 is incident on a first area of the pixel array. Furthermore, a number of pixels of the SPAD array are activated. The activated pixels are shown as illustrated for pixel 7016. Therefore, of the pixel array, only one pixel has been activated, is present within the area of the light distribution 7004 and detects a photon at this first instance of time.

On the right-hand side of the second panel of Figure 7D, the output of the array at a second instance of time is shown. Here, the array is at a different position, having been shifted to a random or pseudo random position through actuation by the actuator. Moreover, the mask of activated pixels has also been randomly or pseudo randomly generated and changed at the second instance of time (compared to the first instance of time). Therefore, at the second instance of time, the light distribution is incident on a second area of the pixel array (different from the first area of the pixel array). Moreover, two pixels have been activated, are present within the area of the light distribution 7004 and have detected a photon at the second instance of time.

By actuation of the pixel array to a random or pseudo random position and by changing a random or pseudo random pattern of enabled pixels, a pseudo random sampling of the light distribution 7004 can be performed. This can be performed over a number of image frames; the number of frames can be larger than the two frames described with reference to Figure 7D. A random (or pseudo random) oversampling of the image can thus be performed by shifting the position of the pixel array and acquiring image data (sampling) the image at each of the different positions of the pixel array. Any suitable signal processing can be used by the skilled person to perform the reconstruction of the image from the spatial oversampling which has been performed. This provides an output image with much higher resolution than the pixel array.

Accordingly, the random (or pseudo random) actuation of the second image sensor can be used in order to increase the spatial resolution of the output image. Thus, the second image sensor can be used in order to obtain high quality image data which can be used in order to optimize or enhance the image data from a first image sensor. Furthermore, said second image sensor can be implemented in an image sensor system without increasing the physical size (form factor) or cost of the image sensor system.

### <Actuation of the second image sensor>

The movement of the second image area I2 through actuation of the second image sensor 2004 has been described. However, further detail of the actuation of the second image sensor 2004 will now be described.

The image sensor system 2000 comprises an actuator 2006 for actuation of the second image sensor 2004. In examples, the actuator 2006 may be configured to actuate the second image sensor 2004 as a whole (such that the second image sensor 2004, as a unit, changes its position). In examples, the actuator 2006 may be configured to actuate the second image sensor 2004 by actuation of an individual part or component of the second image sensor. This enables a different part or component of the second image sensor to be moved as required, providing improved control of the movement of the second image sensor (and the second image area I2).

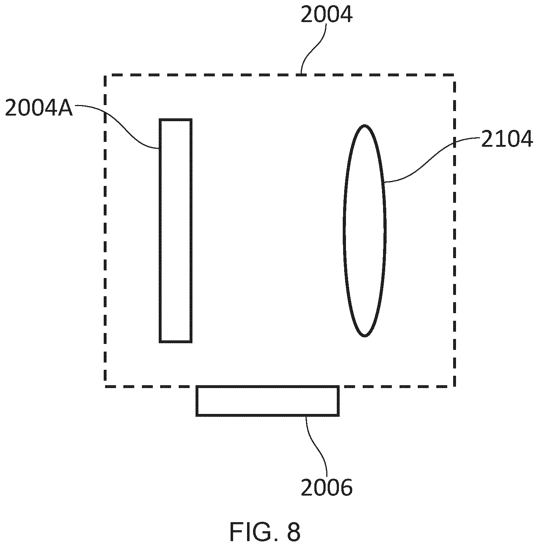

Consider, now, Figure 8 of the present disclosure. Figure 8 illustrates an example configuration of the second image sensor in accordance with embodiments of the disclosure.

In this example, the image sensor 2004 comprises a pixel array 2004A (such as the SPAD array) and a lens 2104. The lens 2104 is an example of a refractive element which can be used in an image sensor such as image sensor 2004. That is, the lens 2104 receives light from the scene (potentially having passed through an image filter) and focuses that light upon the pixel array 2004A in order that the pixel array 2004A can acquire image data of the scene. Alternatively to the refractive element (such as the lens) a reflective element or a diffractive element may be provided in order to focus the light onto the image sensor. In examples, a combination of optical elements (including refractive, reflective and diffractive elements) may be provided.

In examples, the actuator 2006 may be configured to actuate the image sensor 2004 as a whole (e.g. the actuator may be coupled with a casing of the image sensor 2004, for example). In this way, the actuator may cause the image sensor 2004 to undergo rotational and/or linear actuation. The relative positions of the components of the image sensor 2004 (i.e. the relative position between the pixel array 2004 and the lens 2104 can be maintained.

In examples, the actuator 2006 may be configured to actuate one or more individual parts of the image sensor 2004. For example, the actuator may be configured to actuate the pixel array 2004A. In examples, the actuator may be configured to actuate the lens 2104. In this way, the actuator may cause the pixel array 2004A and/or the lens 2104 to undergo rotational and/or linear actuation. The relative positions of the components of the image sensor 2004 (i.e. the relative position between the pixel array 2004 and the lens 2104 can thus be changed). This can provide increased levels of control when changing the position of the second image area within the first image area.

In examples, the actuator 2006 may be configured to adjust the position of an element or elements of the second image sensor 2004 as part of an active alignment of the image sensor. For example, a shift of an element or elements of the image sensor in a z-direction of the second image sensor 2004 may be performed. As such, the actuator 2006 may be controlled, by the controller 2008, to perform active alignment of the image sensor in accordance with one or more external factors (such as temperature or the like) to maintain configuration of the image sensor 2004 in an optimum configuration.

While the example of Figure 8 has been described with reference to a second image sensor 2004, it will be appreciated that the present disclosure is not particularly limited to the internal configuration of the second image sensor 2004 illustrated with this example. For example, while Figure 8 shows only a single lens 2104, it will be appreciated that a plurality of lenses (or optical elements) may be provided. Furthermore, while only a single actuator 2006 is shown, a plurality of different actuators may be provided. The different actuators may be configured for a different type of movement (e.g. linear or rotational) may configured for actuation of different elements within the second image sensor (for example, the pixel array 2004A and the lens 2014) and may be of different types (e.g. a piezoelectric actuator and an ultrasonic actuator or a shape memory alloy actuator, for example).

### <Filters>

The first image sensor 2002 and the second image sensor 2004 of the image sensing system 2000 have been described. Each of the first image sensor 2002 and the second image sensor 2004 comprise a pixel array (pixel array 2002A for the first image sensor and pixel array 2004A for the second image sensor). The pixels of the first image sensor are configured to detect light in at least a first wavelength band and the pixels of the second image sensor are configured to detect light in at least a second wavelength band. In examples, the first and the second wavelength band may be the same wavelength band, with each image sensor configured to detect light in a visible wavelength range (e.g. light within a wavelength range of 380 to 700nm for example).

However, in examples, in order to provide colour images, filters may be provided; the filter may be configured such that a portion of the pixels of the image sensor receive light of a first band within the wavelength range (e.g. red light), a second portion of the pixels of the image sensor receive light of a second band within the wavelength range (e.g. green light) and a third portion of the pixels of the image sensor receive light of a third band within the wavelength range (e.g. blue light). In this way, the image sensor can be used in order to provide a colour image (constructed from separate red, green and blue image data from the image sensor, for example).

In examples, the filter may be a filter such as a colour filter array. In examples, the colour filter array may be a Bayer filter.

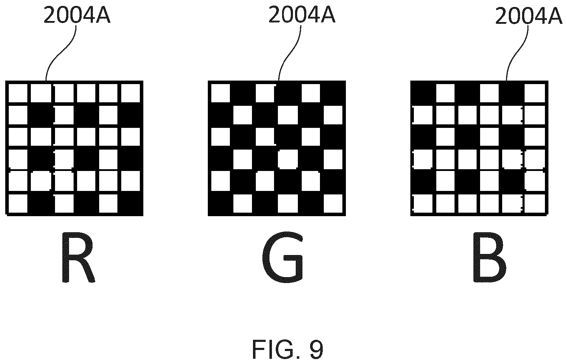

Consider, now, Figure 9 of the present disclosure. Figure 9 illustrates an example filter pattern in accordance with embodiments of the disclosure.

The example filter array of Figure 9 may be a filter array for the first image sensor 2002. Therefore, Figure 9 shows the pixel array 2002A of the first image sensor 2002 in three different panels. In this example, the first pixel array is a 6 by 6 array of pixels (however, the present disclosure is not particularly limited in this respect). The first panel R of Figure 9 shows the configuration of the filter corresponding to portions of the filter which enable transmittal of light of a red wavelength range (such that the pixels in this position can be used to produce image data of red light). The second panel G of Figure 9 shows the configuration of the filter corresponding to portions of the filter which enable transmittal of light of a green wavelength range (such that the pixels in this position can be used to produce image data of green light). The third panel B of Figure 9 shows the configuration of the filter corresponding to portions of the filter which enable transmittal of light of a blue wavelength range (such that the pixels in this position can be used to produce image data of blue light).

With a filter such as that illustrated in Figure 9, the first image sensor 2002 can be used to acquire image data which can produce a colour image.

While the example of Figure 9 has been described with reference to the first image sensor 2002, it will be appreciated that the second image sensor 2004 may also be provided with a filter such as a colour array in order that the second image sensor 2004 can acquire image data of different colours which can then be used in order to complement or enhance the data acquired by the first image sensor.

Furthermore, while the example of Figure 9 has been described with reference to a colour filter array such as a Bayer filter, it will be appreciated that the present disclosure is not particularly limited in this respect. More generally, any suitable filter or filter type material can be used when performing imaging with the image sensor system 2000 as required depending on the situation to which the embodiments of the disclosure are applied.

### <Generation of Output Image>

The image sensor system 2000 as described with Figure 2 may be configured to use image data from the first image sensor 2000 and the second image sensor 2002 in order to generate an output image.

That is, in examples, the controller may use image data from the second image sensor 2004 (having been actuated to align the second image area with a position within the first image area) in order to enhance image data from the first image sensor. For example, when the first image sensor is a sensor such as a CMOS sensor or the like, the image quality of the image data acquired from the first image sensor may be lower in a certain situation (such as in low light levels). Therefore, data from the second image sensor (which can detect the arrival of single photons) can be used in order to enhance the image data from the first image sensor, thus providing an output image from the image system 2000 with improved image quality (such as better image quality in low light conditions).

The way in which the image data from the first image sensor 2000 is combined with the image data from the second image sensor 2004 in order to generate the output image from the image system 2000 is not particularly limited. Any suitable algorithm or process known in the art for combination or fusion of image data can be used as required. In examples, spatial domain fusion methods can be used. In examples, transform domain fusion methods can be used. In examples, fusion methods such as principal component analysis can be used (an example of a spatial domain fusion method).

Furthermore, in examples, a trained model can be used in order to generate the output image.

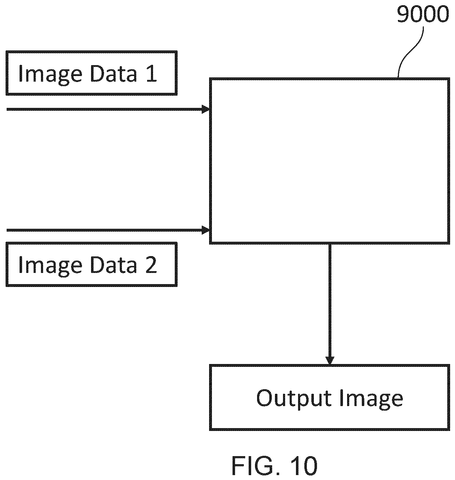

Consider, now, Figure 10 of the present disclosure. Figure 10 of the present disclosure illustrates an example of generating an output image in accordance with embodiments of the disclosure.

In this example, a trained model 9000 is provided. The trained model 9000 has been trained on image data (simulated or historical) in order to generate an output image using image data from a number of image sensors. Training of the trained model is described in more detail later.

The trained model receives image data 1 from the first image sensor 2002. Furthermore, the trained model receives image data 2 from the second image sensor 2004. The second image sensor 2004 may have a much higher frame rate than the first image sensor 2002. Therefore, the trained model may receive multiple frames of image data from the second image sensor 2004 in the time period for which one frame of image data is received from the first image sensor 2002. The trained model is thus configured to use the single frame of image data from the first image sensor 2002 with the multiple frames of image data from the second image sensor 2004 in order to produce the output image. The multiple frames of the image data from the second image sensor may comprise frames which, together, cover an area of the first image sensor (such as when the second image area is smaller than the first image area). The multiple frames of the image data from the second image sensor may comprise frames which, together, provide high resolution data covering an area of the first image sensor (such as when a number of pixels of the array of pixels of the second image sensor is less than a number of pixels of the array of pixels of the first image sensor and oversampling has been performed through actuation of the second image sensor).

The output image is an image in which the data from the second image sensor 2004 has been used, by the trained model, to enhance the image data from the first image sensor 2002. Therefore, in comparison to an image generated from the image data from the first image sensor 2002, the output image generated by the trained model is an image of improved image quality. That is, the data from the second image sensor 2004 can be used in order to enhance an image brightness or an image resolution compared to an image generated from the first data (from the first image sensor) alone. Furthermore, the data from the second image sensor 2004 can be used in order to reduce a level of blur for objects in the image compared to an image generated from the first data (from the first image sensor) alone.

In addition, because the second data is generated from the second image sensor being actuated by the actuator 2006 under the control of the controller 2008, the second image sensor 2004 can be made small. That is, the size of the second image sensor 2004 can be made small in comparison to the size of the first image sensor. Therefore, the image quality can be improved without increasing the physical size of the image sensor system (or a device in which the image sensor system is used).

In an examples, the methods and techniques herein may at least partly be implemented using a supervised machine learning model (as an example of the trained model).

The supervised learning model is trained using labelled training data to learn a function that maps inputs (typically provided as feature vectors) to outputs (i.e. labels). The labelled training data comprises pairs of inputs and corresponding output labels. The output labels are typically provided by an operator to indicate the desired output for each input. The supervised learning model processes the training data to produce an inferred function that can be used to map new (i.e. unseen) inputs to a label.

The input data (during training and/or inference) may comprise various types of data, such as numerical values, images, video, text, or audio. Raw input data may be pre-processed to obtain an appropriate feature vector used as input to the model - for example, features of an image or audio input may be extracted to obtain a corresponding feature vector. It will be appreciated that the type of input data and techniques for pre-processing of the data (if required) may be selected based on the specific task the supervised learning model is used for.

In examples, the labelled training data may include data from the first and second image sensor; the training data may also include examples of images which have been generated from the first and second image data (where the second image data has been used in order to improve the image quality of the first image data).

Once prepared, the labelled training data set is used to train the supervised learning model. During training the model adjusts its internal parameters (e.g. weights) so as to optimize (e.g. minimize) an error function, aiming to minimize the discrepancy between the model's predicted outputs and the labels provided as part of the training data. In some cases, the error function may include a regularization penalty to reduce overfitting of the model to the training data set.

The supervised learning model may use one or more machine learning algorithms in order to learn a mapping between its inputs and outputs. Example suitable learning algorithms include linear regression, logistic regression, artificial neural networks, decision trees, support vector machines (SVM), random forests, and the K-nearest neighbour algorithm.

Once trained, the supervised learning model may be used for inference - i.e. for predicting outputs for previously unseen input data. The supervised learning model may perform classification and/or regression tasks. In a classification task, the supervised learning model predicts discrete class labels for input data, and/or assigns the input data into predetermined categories. In a regression task, the supervised learning model predicts labels that are continuous values.

As such, in examples (once trained) the trained model may be used to generate output images from previously unseen input data (i.e. previously unseen data from the first and second image sensor).

In some cases, limited amounts of labelled data may be available for training of the model (e.g. because labelling of the data is expensive or impractical). In such cases, the supervised learning model may be extended to further use unlabelled data and/or to generate labelled data.

Considering using unlabelled data, the training data may comprise both labelled and unlabelled training data, and semi-supervised learning may be used to learn a mapping between the model's inputs and outputs. For example, a graph-based method such as Laplacian regularization may be used to extend a SVM algorithm to Laplacian SVM in order to perform semi-supervised learning on the partially labelled training data.

Considering generating labelled data, an active learning model may be used in which the model actively queries an information source (such as a user, or operator) to label data points with the desired outputs. Labels are typically requested for only a subset of the training data set thus reducing the amount of labelling required as compared to fully supervised learning. The model may choose the examples for which labels are requested - for example, the model may request labels for data points that would most change the current model, or that would most reduce the model's generalization error. Semi-supervised learning algorithms may then be used to train the model based on the partially labelled data set.

Furthermore, examples of the present invention may use generative artificial intelligence (Al) systems and techniques. The generative artificial intelligence system may be used as an example of a trained model in the present disclosure.

A generative Al system learns patterns and structures in its input training data, in order to then generate new output data which exhibits similar characteristics to the training data. Each of the input training data and output data may comprise various types of data, such as images, video, text, or audio. For example, the generative Al system may learn patterns in input training images, and then generate images that have similar characteristics.

The generative Al system may generate output data based on an input prompt. Like the training and output data, the prompt may comprise various types of data, such as images, video, text, or audio. The prompt may be of the same or different data type to the model's training and/or output data. For example, the input prompt may comprise text and the output data may comprise an image (e.g. matching an input text description of a desired image), or the input prompt may comprise an image and the output data may comprise audio data (e.g. with a theme matching the input image).

The generative Al system may comprise a generative model trained to learn a probability distribution of the input training data, and generate new output data based on this learned distribution. For example, for a set of data instances / observable variables (X) and a set of labels / target variables (Y) in the training data set, the generative model may learn a joint probability distribution of data instances and labels p(X,Y), and/or a probability distribution of the data instances p(X) (for example where no labels are available).

Example suitable generative models for learning a probability distribution of the input training data include Variational Autoencoders (VAEs), transformer-based models, diffusion models (e.g. denoising diffusion probabilistic models (DDPMs)), Reinforcement Learning (RL), and Generative Adversarial Networks (GANs). The choice of generative model may depend on the specific task performed by the generative Al system.

The generative model may comprise one or more artificial neural networks. For example, a Variational Autoencoder (VAE) may comprise a pair of neural networks acting as an encoder and a decoder to and from a reduced (i.e. latent space) representation of the training data respectively, and a Generative Adversarial Network (GAN) may comprise a first 'generator' neural network that generates new data and a second 'discriminator' neural network that learns to discriminate between generated data and real data. The one or more constituent neural networks of the generative model may be trained together or separately.

During training the generative model may adjust its internal parameters (e.g. neural network weights) so as to optimize (e.g. minimize) a loss/error function, aiming to minimize discrepancy between the generated output data and desired output data. It will be appreciated that the specific loss function, and algorithm used to optimize the function may vary depending on the nature of the generative model, and its intended application. For example, a mean squared error loss function may be used for an image generation task, and a cross-entropy loss function may be used for a text generation task. These loss functions may be optimized using various existing optimization algorithms, such as gradient descent.

Once trained, the generative model may be used to generate new output data based on an input prompt. The input prompt may be provided by a user, or by an appropriate device (e.g. using an application programming interface (API)). Thus, the generative AI system allows generating new content (e.g. images, text, or audio) based on only a prompt and without requiring detailed instructions for doing so.

Thus, in examples, a trained model can be used in order to generate the output image from the image data which has been acquired. However, the present disclosure is not particularly limited in this respect and more generally any suitable processing can be applied by the controller to the image data which has been acquired in order to generate the output image.

In examples, the processing to generate the output image may be performed by an external device. In examples, the processing to generate the output image may be performed by processing circuitry of an information processing device (such as an image capture device) in which the image sensor system 2000 is included. In examples, the processing to generate the output image may be performed by a server.

In examples, processing may be performed on the data from the image sensors before the processing to generate the image data (i.e. the image data may be pre-processed). That is, image data acquired from the second image sensor may have a very high frame rate. Accordingly, the image data produced by the second image sensor 2004 may be very large. Accordingly, prior to processing that image data (or transmitting that data to an external device for processing) the controller may perform analysis of the image data which has been acquired. The analysis (pre-processing) performed by the controller may be used to identify portions of the second image data which have information which can be used in order to enhance the first image data. For example, the analysis may be performed with respect to an area of the image data from the first image sensor which has a low image quality. Then, the controller may reduce the second image data by filtering the second image data to retain only the most relevant second image data (the second image data which can be used in order to enhance the output image). This may reduce power consumption, latency and storage requirements of the image sensor system 2000.

In examples during processing (or pre-processing) the controller may be configured to identify an area or areas having a low image quality (e.g. a low signal level or the like) and may be configured to control the actuation of the actuator such that the second image sensor (e.g. the SPAD) acquires additional information for such area or areas which have been identified. This targeted actuation of the second image sensor can ensure that image data from the second image sensor is acquired for the most relevant area or areas, thus improving the image quality. Moreover, when the second image data is acquired only for these most relevant image areas (as opposed to the entire image) the power consumption, latency and storage requirements can also be reduced.

In examples, during processing (or pre-processing) the controller may be configured to use the high frame rate of the second image sensor to track objects moving in the scene at high speed (as these objects may move between frames of the second image sensor). The controller may then be configured to use information concerning the movement of the fast moving objects in the images from the second image sensor to compensate blurring caused by such fast moving objects in the image data from the first image sensor (which has a higher resolution, but a lower frame rate than the second image sensor). In examples, this compensation may be applied using a trained model as described with reference to Figure 10 of the present disclosure. However, the present disclosure is not particularly limited in this regard. In this way, motion blur in the image data from the first image sensor can be reduced which further improves the image quality of the output image.

Accordingly, the image sensor 2000 can generate an output image from the image data acquired by the first and second image sensors.

### <Time of Flight>

In some situations, it may be desired to use an image sensor capable of detecting arrival of a single photon to detect depth within an environment. That is, a sensor capable of detecting arrival of a single photon (such as a single photon avalanche diode, SPAD) can be used in order to accurately determine time of arrival of a photon. Therefore, a time-of-flight sensor can be used to determine depth based on a time at which light emitted from a light emitter and reflected by an object in the scene arrives at the SPAD. The depth is determined in accordance with the time it takes from the light to travel from the light emitter to an object and then back to the SPAD.

However, as previously explained in the Background, it can be very difficult to produce such an image sensor (capable of detecting time of arrival of a single photon) which satisfies constraints of physical size and space. Furthermore, the cost of these image sensors can be very high. Accordingly, use of single photon detector image sensors (such as depth sensors) is quite limited.

As such, an image sensor system, a method and a computer program are provided in accordance with embodiments of the disclosure.

That is, in accordance with embodiments of the disclosure, an actuator can be provided within an image sensor system to actuate the image sensor (such as the SPAD) to move the image sensor while acquiring image data at a high frame rate. This enables a small, low resolution image sensor to be used with high speed actuation and frame rate to boost effective pixel count of the image sensor. Thus, an image system can be provided which can produce image depth data of higher quality, without increasing the physical size and cost of the image sensor system. Therefore, an image sensor system capable of being used in a wide range of situations can be provided.

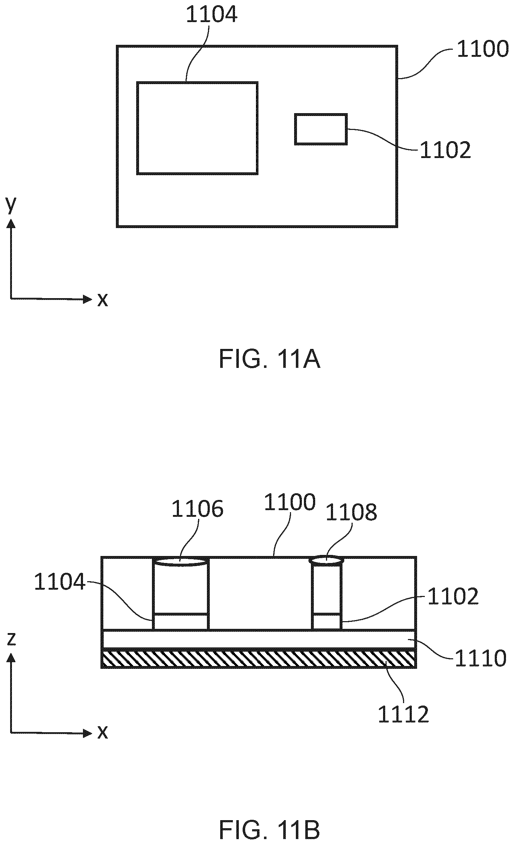

Consider, now, Figures 11A and 11B of the present disclosure. Figures 11A and 11B illustrate a configuration of an image sensor system in accordance with embodiments of the disclosure.

In this example, an image sensor system 1100 (a time of flight sensor) is shown, the image sensor system 1100 comprising an image sensor 1104 and a light emitter 1102.

Figure 11A shows the image sensor 1104 in an x-y plane.

The light emitter 1102 of the image sensor system 1100 is configured to emit light of at least a first wavelength range within a first image area. In examples, the light emitter may be a vertical-cavity surface-emitting laser (VCSEL). However, the present disclosure is not particularly limited to this specific example of a light emitter. In examples, the light emitter 1102 may be any light source which can emit photons of light which can be used in order to measure depth in a scene (based on time of flight). In examples, the light emitter may emit light in a wavelength range of 650nm to 1400nm. Indeed, in examples, the light emitted by the light emitter 1102 may be light outside a visible wavelength range; this enables the light emitter of the image sensor system to be used alongside a visible light imaging system.

The image sensor 1104 is an image sensor such as image sensor 2004 which has been described with reference to Figure 2 of the present disclosure. Therefore, the second image sensor comprises an array of pixels being configured to detect light of at least the first wavelength range (i.e. the wavelength of light emitted by the light emitter) within a second image area smaller than the first image area (the area over which the light emitter emits light). Furthermore, each pixel of the array of pixels of the image sensor is configured to detect arrival of a single photon. Therefore, as described with reference to Figure 2 of the present disclosure, the image sensor 1104 may be an image sensor such as a SPAD or the like.

An actuator 1112 and a controller are also provided as part of the image sensor 1104. The controller is not illustrated in the example of Figures 11A to 11E of the present disclosure.

The actuator 1112 is configured to actuate the image sensor and the controller is configured to control the actuator to actuate the second image sensor and position the second image area within a portion of the first image area while obtaining depth information with the image sensor system. The details of the actuator and the controller are the same as described with reference to the example of Figure 2 of the present disclosure and further details will not be provided at this stage for brevity of the disclosure.

Figure 11B shows the image sensor 1104 in an x-z plane.

In the x-z plane, a number of additional elements of the image sensor system 1104 are shown. For example, a lens 1106 is provided over the image sensor 1104; this can be used in order to focus light on the image sensor 1104. In examples, the lens can be any optical element configured to focus light on the image sensor. In examples, the lens may be provided as part of an external device and not part of the image sensor system 1100 at all. Likewise, in this example, a diffractive optical element 1108 is provided over the light emitter 1102.

In examples, the actuator 1112 can be configured to actuate the image sensor 1104 and/or the lens 1106. That is, the image sensor 1104 and the lens 1106 can be actuated to maintain a relative configuration of the image sensor 1104 and/or the lens 1106. Alternatively, the image sensor 1104 and the lens 1106 can be actuated to change a relative configuration of the image sensor 1104 and/or the lens.

In Figure 11B, the image sensor system 1100 is formed on a printed circuit board. Furthermore, in the example of Figure 11B, the actuator 1112 is provided below the PCB 1110 and coupled to the PCB 1110. Accordingly, the actuator can be used to move the image sensor system 1100 as a whole (i.e. while retaining the relative position of the elements of the image sensor system 1100). For example, the actuator may be configured to translate the image sensor system in an X and Y direction. Alternatively, the actuator may be configured to rotate the actuator along the X and Y axis. This enables spatial scanning to be performed.

By actuation of the image sensor 1104, the image sensor 1104 can be used to detect time of arrival data of photons across the first image area, even though the image area covered by the image sensor (i.e. the second image area) is smaller than the area covered by the light emitter. Accordingly, the controller can generate image depth information having improved quality across the first area (using data from the image sensor 1104).

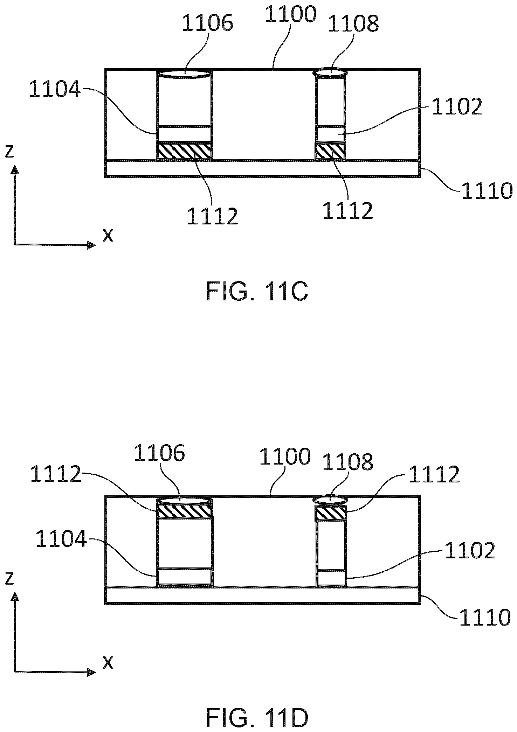

Consider, now, Figure 11C. Figure 11 C of the present disclosure shows another configuration of the image sensor system 1100 in accordance with embodiments of the disclosure. In this example, the actuator 1112 is coupled individually to the image sensor 1104 and the light emitter 1102. In examples, multiple independent actuators 1112 may be provided. Accordingly, the actuator 1112 can be used to move the second image sensor 1104 independently from the other elements of the image sensor system 1104. For example, the actuator 1112 may move the second image sensor 1104 relative to the lens 1106, the light emitter 1102 and/or the diffractive optical element 1108. Likewise, the actuator 1112 may move the light emitter 1102 relative to the image sensor 1104, the diffractive optical element 1108 and/or the lens 1106. In this way, by changing the position of the components of the image sensor system 1100 under control of the controller, spatial scanning can be performed. Moreover, as the relative position of the components can be changed, more accurate control of the spatial scanning can be performed.

Furthermore, actuation of the light emitter (such as the VCSEL) can be performed in order to increase the field of view and/or control the target of the light emitter such that the light is provided only in a region (or regions) where it is required. For example, the actuation of the light emitter may be performed (under control of the controller) such that a target region (or area) is illuminated by light from the light emitter such that depth information can be acquired only for that target region or area. This can further improve efficiency, as light may only be emitted for a certain area for which depth information is required.

Consider, now, Figure 11D. Figure 11D shows another configuration of the image sensor system 1100 in accordance with embodiments of the disclosure. The example of Figure 11D differs from the example of Figure 11C in that the actuator 1112 is coupled to the lens 1106 of the image sensor 1104 and the diffractive optical element 1108. In examples, the actuator 1112 may be coupled to the image sensor 1104 and the lens 1106. Furthermore, in examples, the actuator 1112 may be coupled to one of the lens 1106 or the diffractive optical element 1108. Alternatively, in examples, the actuator 1112 may be coupled to both of the lens 1106 and the diffractive optical element 1108.

Since, in this example, the actuator 1112 is coupled to the lens 1106, the actuator 1112 can be used to drive a diaphragm (such as a nine blade, for example) to change the aperture of the lens and/or the diffraction optical element. Thus, aperture control can be performed efficiently and easily.

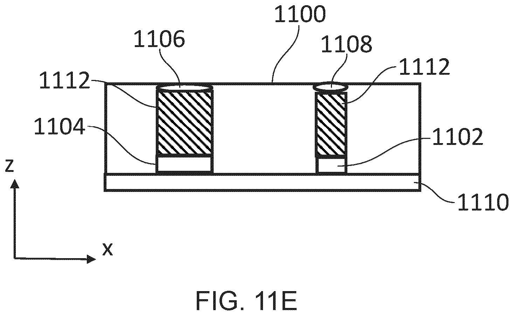

Consider, now, Figure 11E. Figure 11E shows another configuration of the image sensor system 1100 in accordance with embodiments of the disclosure. The example of Figure 11E differs from the example of Figure 11D in that the actuator 1112 is coupled between the lens 1106 and the sensor 1104 and/or between the diffractive optical element 1108 and the light emitter 1102. In this way, the actuator 1112 can be used in order to change the relative position of the lens 1106 and the image sensor 1104 in the z-direction. Alternatively, or in addition, the actuator 1112 can be used in order to change the relative position of the diffractive optical element 1108 and the light emitter 1102 in the z-direction. Accordingly, the actuator 1112 can be controlled, by the controller, to change the relative z-position of these elements and thus can be used in order to perform focusing of the image sensor system 1100.

Furthermore, while the examples of Figures 11B to 11E have been separately described, it will be appreciated that these examples may further be used in combination in order to provide enhanced control of the image sensor system. For example, a number of different actuators 1112 may be provided, each coupled to an independent element of the image sensor system 1100, which thus enables multiple different movements to be performed as required.

The way in which the controller uses the data from the image sensor to generate the depth information is not particularly limited in accordance with embodiments of the disclosure. For example, any suitable process or algorithm to produce depth information from the time of arrival information can be used in accordance with the present disclosure depending upon the situation to which embodiments of the disclosure are applied. Nevertheless, it will be appreciated that from accurate time of arrival information (from the image sensor) the time taken from emission of light from the light emitter to detection of the light at the image sensor after reflection from an object in a scene can be determined. This information can be used in order to determine the distance to the object and thus depth information of the scene.

Therefore, in examples, an image sensor system for obtaining depth information is provided, the image sensor system comprising: a light emitter, the light emitter being configured to emit light of at least a first wavelength range within a first image area; an image sensor, the second image sensor comprising an array of pixels being configured to detect light of at least the first wavelength range within a second image area smaller than the first image area, each pixel of the array of pixels of the image sensor being configured to detect arrival of a single photon; an actuator configured to actuate the image sensor; and a controller configured to control the actuator to actuate the second image sensor and position the second image area within a portion of the first image area while obtaining depth information with the image sensor system.

In this way, an image sensor system can be provided which can produce image depth data of higher quality, without increasing the physical size and cost of the image sensor system. Therefore, the image sensor system capable of being used in a wide range of situations can be provided.

Furthermore, in examples, the light emitter 1102 can be included in an image sensor such as image sensor 2000. That is, an image sensor with a first image sensor 2002, a second image sensor 2004 and a light emitter 1102 can be provided. However, in examples, an image sensor can be provided with a second image sensor 1104 and a light emitter 1102. As such, the first image sensor 2002 and the light emitter 1102 can be used either alone or in combination with the (actuated) second image sensor.

### <Methods>

Hence, more generally, methods of controlling an image sensor system are provided in accordance with embodiments of the disclosure.

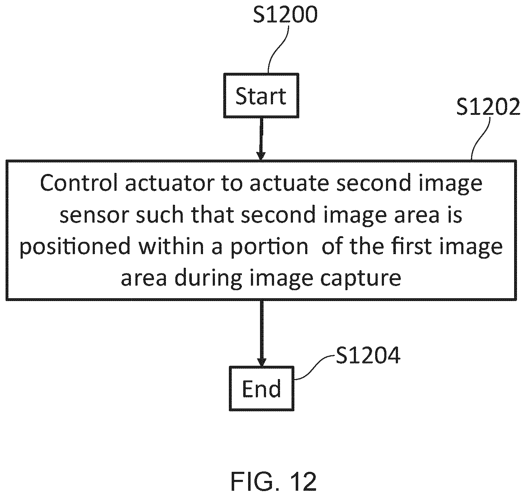

Figure 12 illustrates a method in accordance with embodiments of the disclosure. The method of Figure 12 may be performed by control circuitry of the image sensor system (such as the controller 2008 as described with reference to Figure 2 of the present disclosure). Alternatively, the method of Figure 12 may be performed by control circuitry external to the image sensor system (such as processing circuitry 1002 of apparatus 1000 as described with reference to Figure 1 of the present disclosure.

The method of Figure 12 starts at step S1200 and proceeds to step S1202.

In step S1202, the method comprises controlling the actuator to actuate the second image sensor such that the second image area is positioned within a portion of the first image area during image capture with the image sensor system.

The method proceeds to and ends with step S1204.

In this way, the position of the second image area within the first image area can be changed during image capture. This enables the second image sensor to be used in order to obtain image data which can be used in order to optimize or enhance the image data from the first image sensor.

It will be appreciated that the method of Figure 12 is an example illustration of a method of controlling an image sensor system in accordance with embodiments of the disclosure. As such, the present disclosure is not particularly limited to the example method illustrated with reference to Figure 12 of the present disclosure. A number of additional method steps may also be included within the method of controlling the image sensor system in embodiments of the disclosure.

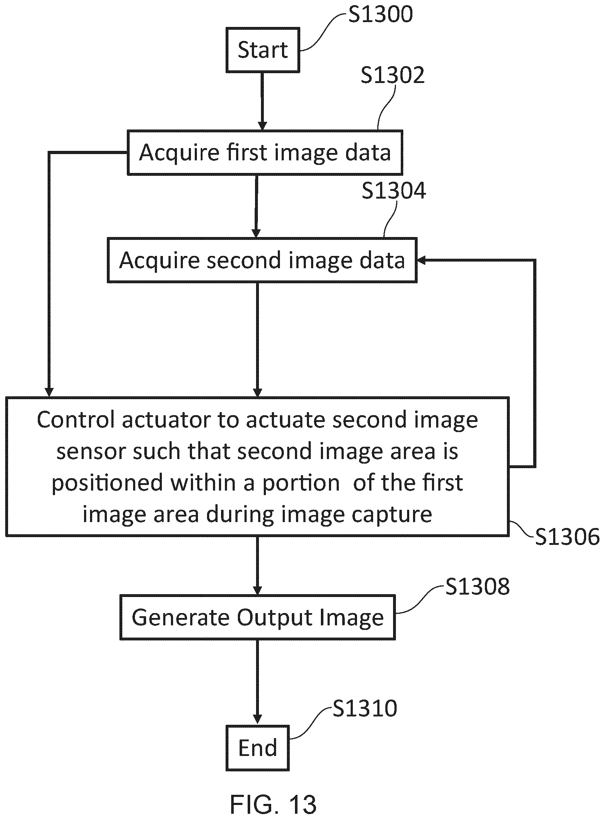

Figure 13 illustrates a method in accordance with embodiments of the disclosure. The method of Figure 13 may be performed by control circuitry of the image sensor system (such as the controller 2008 as described with reference to Figure 2 of the present disclosure). Alternatively, the method of Figure 13 may be performed by control circuitry external to the image sensor system (such as processing circuitry 1002 of apparatus 1000 as described with reference to Figure 1 of the present disclosure.

The method of Figure 13 starts at step S1300 and proceeds to step S1302.

In step S1302, the method comprises acquiring first image data. The first image data is image data acquired using the first image sensor 2002 of the image sensor system 2000.

In step S1304, the method comprises acquiring second image data. The second image data is image data acquired using the second image sensor 2004 of the image sensor system 2000.

In step S1306, the method comprises controlling the actuator to actuate the second image sensor such that the second image area is positioned within a portion of the first image area during image capture with the image sensor system. In this example, the control of the actuator may be performed based on the acquired first image data. For example, analysis of the first image data from the first image sensor 2002 may indicate that a portion of the first image data from the first image sensor 2002 has an image quality below a threshold value (for example, an excessive level of blur in the image in a certain image portion). Accordingly, the actuator may be controlled in order to position the second image area such that the second image data (by the second image sensor 2002) can be acquired for this portion of the first image area. The method of control illustrated in Figure 13 therefore provides a feedback mechanism whereby the second image data is acquired for a targeted portion of the first image area (based on the first image data which has been acquired).

In step S1308, the first image data and the second image data which have been acquired are used to generate output image data. In examples, the first and second image data may be fused or combined by the controller to generate the output image. In examples, a trained model can be used in order to generate the output image.

Once the output image has been generated, the example method of Figure 13 proceeds to and ends with step S1310.

It will be appreciated that the method of Figure 13 is an example illustration of a method of controlling an image sensor system in accordance with embodiments of the disclosure. As such, the present disclosure is not particularly limited to the example method illustrated with reference to Figure 13 of the present disclosure. A number of additional method steps may also be included within the method of controlling the image sensor system in embodiments of the disclosure. Furthermore, the steps of the method may be performed in a different order than illustrated in Figure 13 in accordance with embodiments of the disclosure. For example, once a first output image has been generated, the method may return to step S1304 (acquisition of the first image data). Thus, in examples, the frame rate of the output image generated by the image sensor system may be the same as the frame rate of the first image sensor 2002 (with the higher frame rate of the second image sensor 2004 being used in order to capture image data which can be used to enhance the image data acquired from the first image sensor 2002).

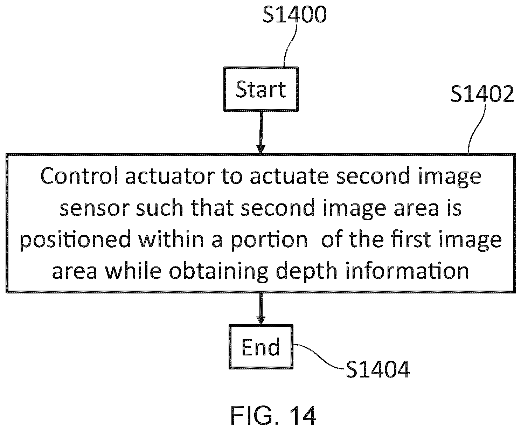

Figure 14 illustrates a method in accordance with embodiments of the disclosure. The method of Figure 14 may be performed by control circuitry of the image sensor system (such as the controller of an image sensor system 1100 as described with reference to Figure 11 of the present disclosure). Alternatively, the method of Figure 14 may be performed by control circuitry external to the image sensor system (such as processing circuitry 1002 of apparatus 1000 as described with reference to Figure 1 of the present disclosure.

The method of Figure 14 starts at step S1400 and proceeds to step S1402.

In step S1402, the method comprises controlling the actuator to actuate the second image sensor such that the second image area is positioned within a portion of the first image area while obtaining depth information with the image sensor system (such as image sensor system 1100 as described with reference to Figure 11 of the present disclosure).

The method proceeds to and ends with step S1404.

In this way, the position of the second image area within the first image area can be changed while obtaining image depth information. This enables the second image sensor to be used in order to obtain higher quality depth information without increasing the size and cost of the image sensor system.

It will be appreciated that the method of Figure 14 is an example illustration of a method of controlling an image sensor system in accordance with embodiments of the disclosure. As such, the present disclosure is not particularly limited to the example method illustrated with reference to Figure 14 of the present disclosure. A number of additional method steps may also be included within the method of controlling the image sensor system in embodiments of the disclosure.

### <Computer Program>

Furthermore, it will be appreciated that the methods of the present disclosure may be carried out on conventional hardware (such as that described previously herein) suitably adapted as applicable by software instruction or by the inclusion or substitution of dedicated hardware. Thus, the required adaptation to existing parts of a conventional equivalent device may be implemented in the form of a computer program product comprising processor implementable instructions stored on a non-transitory machine-readable medium such as a floppy disk, optical disk, hard disk, PROM, RAM, flash memory or any combination of these or other storage media, or realized in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

### <Clauses>

In addition, embodiments of the present disclosure can be arranged in accordance with the following numbered clauses:
1) An image sensor system for image capture, the image sensor system comprising:
   as first image sensor, the first image sensor comprising an array of pixels being configured to detect light of at least a first wavelength range within a first image area;
   a second image sensor, the second image sensor comprising an array of pixels being configured to detect light of at least a second wavelength range within a second image area, wherein a number of pixels of the array of pixels of the second image sensor is less than a number of pixels of the array of pixels of the first image sensor and/or the second image area is smaller than the first image area, each pixel of the array of pixels of the second image sensor being configured to detect arrival of a single photon;
   an actuator configured to actuate the second image sensor; and
   a controller configured to control the actuator to actuate the second image sensor such that the second image area is positioned within a portion of the first image area during image capture with the image sensor system.
2) The image sensor system according to clause 1, wherein a frame rate of image data from the second image sensor is higher than a frame rate of image data from the first image sensor.
3) The image sensor system according to clause 2, wherein the controller is configured to control the actuator to actuate the second image sensor such that the second image area is positioned a plurality of times in association with one image frame of the first image sensor.
4) The image sensor system according to any preceding clause, wherein the controller is configured to control the actuator in accordance with a predetermined pattern.
5) The image sensor system according to any preceding clause, wherein the predetermined pattern is a pattern for the second image area to cover the entire portion of the first image area over a number of frames of image data of the second image sensor.
6) The image sensor system according to any preceding clause, wherein the controller is configured to control the actuator in accordance with image data from at least one of the first image sensor and/or the second image sensor.
7) The image sensor system according to any preceding clause, wherein the controller is configured to analyze the first image data to identify a portion of the first image area having an image quality below a predetermined threshold value and control the actuator to actuate the second image sensor and position the second image area within the identified portion of the first image area.
8) The image sensor system according to clause 6, wherein the image quality includes at least one of a level of brightness in the first image data, a level of blur in the first image data and/or a level of image detail in the first image data.
9) The image sensor system according to any preceding clause, wherein the actuator is configured to actuate the second image sensor in an x-direction parallel to a plane of the image sensor system, a y-direction perpendicular to the x-direction and parallel to a plane of the image sensor system and a z-direction perpendicular to the plane of the image sensor system.
10) The image sensor system according to any preceding clause, wherein the actuator is configured to actuate at least one of the array of pixels of the second image sensor and/or an optical element of the second image sensor.
11) The image sensor system according to any preceding clause, wherein the controller is configured to generate an output image using image data from the first image sensor and the second image sensor.
12) The image sensor system according to clause 11, wherein the controller is configured to use image data from the second image sensor to enhance image data from the first image sensor when generating the output image.
13) The image sensor system according to clause 11 or 12, wherein the controller is configured to use a trained model when generating the output image.
14) The image sensor system according to any preceding clause, wherein the image sensor system further comprises a light emitter coupled to the second image sensor, the light emitter configured to emit light of the second wavelength range.
15) The image sensor system according to clause 14, wherein the light emitter comprises a vertical-cavity surface-emitting laser.
16) The image sensor system according to clause 15, wherein the second wavelength range is a range of 650nm to 1400nm.
17) The image sensor system according to clause 14, wherein the controller is configured to use image data from the second image sensor to calculate depth within the second image area.
18) The image sensor system according to any preceding clause, wherein the array of pixels of the first image sensor and/or the array of pixels of the second image sensor have a Bayer filter pattern.
19) The image sensor system according to any preceding clause, wherein the first wavelength range is the same as the second wavelength range; or the image sensor system according to claim 1 wherein the first wavelength range is different from the second wavelength range.
20) The image sensor system according to any preceding clause, wherein the pixels of the second image sensor are single photon avalanche diodes and/or wherein the pixels of the first image sensor are complementary metal-oxide-semiconductor detectors.
21) An information processing device comprising an image sensor system according to any preceding clause.
22) The image sensor system according to any preceding clause, wherein a pixel size of the second image sensor is bigger than a pixel size of the first image sensor, and wherein a movement amount of the actuator by the controller is smaller than a pixel size of the second image sensor.
23) A method of controlling an image sensor system for image capture, the image sensor system comprising a first image sensor, the first image sensor comprising an array of pixels being configured to detect light of at least a first wavelength range within a first image area; a second image sensor, the second image sensor comprising an array of pixels being configured to detect light of at least a second wavelength range within a second image area, wherein a number of pixels of the array of pixels of the second image sensor is less than a number of pixels of the array of pixels of the first image sensor and/or the second image area is smaller than the first image area, each pixel of the array of pixels of the second image sensor being configured to detect arrival of a single photon; and an actuator configured to actuate the second image sensor; the method comprising:
   controlling the actuator to actuate the second image sensor such that the second image area is positioned within a portion of the first image area during image capture with the image sensor system.
24) A computer program comprising instructions which, when implemented by a computer, cause the computer to perform a method of controlling an image sensor system for image capture, the image sensor system comprising a first image sensor, the first image sensor comprising an array of pixels being configured to detect light of at least a first wavelength range within a first image area; a second image sensor, the second image sensor comprising an array of pixels being configured to detect light of at least a second wavelength range within a second image area, wherein a number of pixels of the array of pixels of the second image sensor is less than a number of pixels of the array of pixels of the first image sensor and/or the second image area is smaller than the first image area, each pixel of the array of pixels of the second image sensor being configured to detect arrival of a single photon; the method comprising:
   controlling the actuator to actuate the second image sensor such that the second image area is positioned within a portion of the first image area during image capture with the image sensor system.
25) A non-transitory computer readable storage medium storing the computer program according to clause 24.
26) An image sensor system for obtaining depth information, the image sensor system comprising:
   a light emitter, the light emitter being configured to emit light of at least a first wavelength range within a first image area;
   an image sensor, the image sensor comprising an array of pixels being configured to detect light of at least the first wavelength range within a second image area smaller than the first image area, each pixel of the array of pixels of the second image sensor being configured to detect arrival of a single photon;
   an actuator configured to actuate the image sensor; and
   a controller configured to control the actuator to actuate the second image sensor such that the second image area is positioned within a portion of the first image area while obtaining depth information with the image sensor system.
27) A method of controlling an image sensor system for obtaining depth information, the image sensor system comprising a light emitter, the light emitter being configured to emit light of at least a first wavelength range within a first image area; an image sensor, the image sensor comprising an array of pixels being configured to detect light of at least the first wavelength range within a second image area smaller than the first image area, each pixel of the array of pixels of the second image sensor being configured to detect arrival of a single photon; and an actuator configured to actuate the image sensor, the method comprising:
   controlling the actuator to actuate the second image area such that the second image area is positioned within a portion of the first image area while obtaining depth information with the image sensor system.
28) A computer program comprising instructions which, when implemented by a computer, cause the computer to perform a method of controlling an image sensor system for obtaining depth information, the image sensor system comprising a light emitter, the light emitter being configured to emit light of at least a first wavelength range within a first image area; an image sensor, the image sensor comprising an array of pixels being configured to detect light of at least the first wavelength range within a second image area smaller than the first image area, each pixel of the array of pixels of the second image sensor being configured to detect arrival of a single photon; and an actuator configured to actuate the image sensor, the method comprising:
   controlling the actuator to actuate the second image sensor such that the second image area is positioned within a portion of the first image area while obtaining depth information with the image sensor system.
29) A non-transitory computer readable storage medium storing the computer program according to clause 28.

Furthermore, it will be appreciated that numerous modifications and variations of the present disclosure are possible in light of the above teachings. It is therefore to be understood that within the scope of the appended claims, the disclosure may be practiced otherwise than as specifically described herein.

In so far as embodiments of the disclosure have been described as being implemented, at least in part, by software-controlled data processing apparatus, it will be appreciated that a non-transitory machine-readable medium carrying such software, such as an optical disk, a magnetic disk, semiconductor memory or the like, is also considered to represent an embodiment of the present disclosure.

It will be appreciated that the above description for clarity has described embodiments with reference to different functional units, circuitry and/or processors. However, it will be apparent that any suitable distribution of functionality between different functional units, circuitry and/or processors may be used without detracting from the embodiments.

Described embodiments may be implemented in any suitable form including hardware, software, firmware or any combination of these. Described embodiments may optionally be implemented at least partly as computer software running on one or more data processors and/or digital signal processors. The elements and components of any embodiment may be physically, functionally and logically implemented in any suitable way. Indeed the functionality may be implemented in a single unit, in a plurality of units or as part of other functional units. As such, the disclosed embodiments may be implemented in a single unit or may be physically and functionally distributed between different units, circuitry and/or processors.

Although the present disclosure has been described in connection with some embodiments, it is not intended to be limited to the specific form set forth herein. Additionally, although a feature may appear to be described in connection with particular embodiments, one skilled in the art would recognize that various features of the described embodiments may be combined in any manner suitable to implement the technique.

## Claims

1. An image sensor system for image capture, the image sensor system comprising:
a first image sensor, the first image sensor comprising an array of pixels being configured to detect light of at least a first wavelength range within a first image area;
a second image sensor, the second image sensor comprising an array of pixels being configured to detect light of at least a second wavelength range within a second image area, wherein a number of pixels of the array of pixels of the second image sensor is less than a number of pixels of the array of pixels of the first image sensor and/or the second image area is smaller than the first image area, each pixel of the array of pixels of the second image sensor being configured to detect arrival of a single photon;
an actuator configured to actuate the second image sensor; and
a controller configured to control the actuator to actuate the second image sensor such that the second image area is positioned within a portion of the first image area during image capture with the image sensor system.

2. The image sensor system according to claim 1, wherein a frame rate of image data from the second image sensor is higher than a frame rate of image data from the first image sensor.

3. The image sensor system according to claim 2, wherein the controller is configured to control the actuator to actuate the second image sensor such that the second image area is positioned a plurality of times in association with one image frame of the first image sensor.

4. The image sensor system according to claim 1, wherein the controller is configured to control the actuator in accordance with a predetermined pattern.

5. The image sensor system according to claim 1, wherein the controller is configured to control the actuator in accordance with image data from at least one of the first image sensor and/or the second image sensor.

6. The image sensor system according to claim 5, i) wherein the controller is configured to analyze the first image data to identify a portion of the first image area having an image quality below a predetermined threshold value and control the actuator to actuate the second image sensor and position the second image area within the identified portion of the first image area; or ii) wherein the image quality includes at least one of a level of brightness in the first image data, a level of blur in the first image data and/or a level of image detail in the first image data.

7. The image sensor system according to claim 1, wherein the actuator is configured to actuate the second image sensor in an x-direction parallel to a plane of the image sensor system, a y-direction perpendicular to the x-direction and parallel to a plane of the image sensor system and a z-direction perpendicular to the plane of the image sensor system.

8. The image sensor system according to claim 1, wherein the controller is configured to generate an output image using image data from the first image sensor and the second image sensor.

9. The image sensor system according to claim 8, wherein the controller is configured to use image data from the second image sensor to enhance image data from the first image sensor when generating the output image.

10. A method of controlling an image sensor system for image capture, the image sensor system comprising a first image sensor, the first image sensor comprising an array of pixels being configured to detect light of at least a first wavelength range within a first image area; a second image sensor, the second image sensor comprising an array of pixels being configured to detect light of at least a second wavelength range within a second image area wherein a number of pixels of the array of pixels of the second image sensor is less than a number of pixels of the array of pixels of the first image sensor and/or the second image area is smaller than the first image area, each pixel of the array of pixels of the second image sensor being configured to detect arrival of a single photon; and an actuator configured to actuate the second image sensor; the method comprising:
controlling the actuator to actuate the second image sensor such that the second image area is positioned within a portion of the first image area during image capture with the image sensor system.

11. A computer program comprising instructions which, when implemented by a computer, cause the computer to perform a method of controlling an image sensor system for image capture, the image sensor system comprising a first image sensor, the first image sensor comprising an array of pixels being configured to detect light of at least a first wavelength range within a first image area; a second image sensor, the second image sensor comprising an array of pixels being configured to detect light of at least a second wavelength range within a second image area, wherein a number of pixels of the array of pixels of the second image sensor is less than a number of pixels of the array of pixels of the first image sensor and/or the second image area is smaller than the first image area, each pixel of the array of pixels of the second image sensor being configured to detect arrival of a single photon; the method comprising:
controlling the actuator to actuate the second image sensor such that the second image area is positioned within a portion of the first image area during image capture with the image sensor system.

12. An image sensor system for obtaining depth information, the image sensor system comprising:
a light emitter, the light emitter being configured to emit light of at least a first wavelength range within a first image area;
an image sensor, the image sensor comprising an array of pixels being configured to detect light of at least the first wavelength range within a second image area smaller than the first image area, each pixel of the array of pixels of the second image sensor being configured to detect arrival of a single photon;
an actuator configured to actuate the image sensor; and
a controller configured to control the actuator to actuate the second image sensor such that the second image area is positioned within a portion of the first image area while obtaining depth information with the image sensor system.

13. A method of controlling an image sensor system for obtaining depth information, the image sensor system comprising a light emitter, the light emitter being configured to emit light of at least a first wavelength range within a first image area; an image sensor, the image sensor comprising an array of pixels being configured to detect light of at least the first wavelength range within a second image area smaller than the first image area, each pixel of the array of pixels of the second image sensor being configured to detect arrival of a single photon; and an actuator configured to actuate the image sensor, the method comprising:
controlling the actuator to actuate the second image sensor such that the second image area is positioned within a portion of the first image area while obtaining depth information with the image sensor system.

14. A computer program comprising instructions which, when implemented by a computer, cause the computer to perform a method of controlling an image sensor system for obtaining depth information, the image sensor system comprising a light emitter, the light emitter being configured to emit light of at least a first wavelength range within a first image area; an image sensor, the image sensor comprising an array of pixels being configured to detect light of at least the first wavelength range within a second image area smaller than the first image area, each pixel of the array of pixels of the second image sensor being configured to detect arrival of a single photon; and an actuator configured to actuate the image sensor, the method comprising:
controlling the actuator to actuate the second image sensor such that the second image area is positioned within a portion of the first image area while obtaining depth information with the image sensor system.

15. A non-transitory computer readable storage medium storing the computer program according to claim 11 or 14.
